# EUROPÄISCHE PATENTSCHRIFT

(11) **EP 2 325 238 B1**
(45) Veröffentlichungstag und Bekanntmachung des Hinweises auf die Patenterteilung: **30.08.2017**
(21) Anmeldenummer: 10191637.7
(22) Anmeldetag: 18.11.2010
(51) Int. Cl.: C08J 3/07, C08L 13/02, C08L 9/04, C09D 133/20

(54) **Feinteilige stabile Suspensionen funktionalisierter, ganz oder teilweise hydrierter Nitrilkautschuke**
Stable fine-particle suspensions of functionalised, wholly or partially hydrated nitrile rubbers
Suspensions stables à particules fines de caoutchouc nitrile totalement ou partiellement hydrogéné et fonctionnalisé

(30) Priorität: 19.11.2009 EP 09176534
(43) Veröffentlichungstag der Anmeldung: 25.05.2011
(73) Patentinhaber: ARLANXEO Deutschland GmbH, 41540 Dormagen (DE)
(72) Erfinder: Soddemann, Matthias, 51503, Rösrath (DE); Duff, Daniel Gordon, 51373, Leverkusen (DE); Krueger, Lars, 51373, Leverkusen (DE); Stein, Sigrun, 51375, Leverkusen (DE)
(74) Vertreter: Wichmann, Birgid

(56) Entgegenhaltungen:
- EP-A1- 0 007 042
- EP-A1- 0 111 412
- EP-A1- 0 704 459
- EP-B1- 0 240 697
- US-A- 3 306 871

## Beschreibung

Die vorliegende Erfindung betrifft neue feinteilige, stabile wässrige Suspensionen eines funktionalisierten, ganz oder teilweise hydrierten Nitrilkautschuks, ein Verfahren zu deren Herstellung und deren Verwendung.

Unter Nitrilkautschuken ("NBR") werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt. Unter hydrierten Nitrilkautschuken ("HNBR") werden entsprechende Nitrilkautschuke verstanden, in denen die C=C-Doppelbindungen der einpolymerisierten Dien-Einheiten ganz oder teilweise selektiv hydriert sind.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit und einer hervorragenden Beständigkeit gegen Ozon und Chemikalien, letztere im Fall des HNBR noch ausgeprägter als beim NBR. Sie weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobil-sektor, ferner für Statoren, Bohrlochdichtungen und Ventildichtungen im Bereich der Ölförderung sowie auch für zahlreiche Teile der Elektroindustrie sowie des Maschinen- und Schiffsbaus. Kommerziell erhältlich sind eine Vielzahl unterschiedlicher Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen mit Gehalten spezieller Termonomere oder besonderer Funktionalisierung zunehmend nachgefragt.

Großtechnisch werden Nitrilkautschuke fast ausschließlich durch sogenannte Emulsionspolymerisation hergestellt, die in Gegenwart größerer Mengen an Emulgatoren durchgeführt wird. Nach der Polymerisation wird der erhaltene NBR-Latex, bei dem es sich um eine durch den anwesenden Emulgator stabilisierte Suspension fester Polymerteilchen in Wasser handelt, in einem ersten Schritt unter Einsatz von Salzen oder Säuren koaguliert und der NBR-Feststoff isoliert. Sofern eine weiterführende Hydrierung des NBR zum HNBR gewünscht ist, erfolgt diese Hydrierung ebenfalls nach bekannten Methoden des Standes der Technik, beispielsweise unter Einsatz homogener oder auch heterogener Hydrierkatalysatoren basierend auf Rhodium, Ruthenium oder Titan oder alternativ Platin, Iridium, Palladium, Rhenium, Osmium, Kobalt oder Kupfer entweder als Metall oder aber in Form von Metallverbindungen. In großtechnischem Maßstab wird diese Hydrierung oft in homogener Phase, d.h. in einem organischen Lösungsmittel durchgeführt.

Der Einsatz von HNBR zur Herstellung von Keilriemen, Zahnriemen und Transportbändern ist bekannt. Diese Artikel bestehen aus einer Kombination von einem Trägermaterial aus Fasern (wie z.B. Polyamidgewebe, Polyestergewebe, Glascord, aromatischem Polyamidcord u.a.) und aus mehreren Gummischichten. Es gibt weitere Gummiartikel, die einen ähnlichen Aufbau haben, wie z.B. Membranen, Schläuche, Behälter, Blasen und Reifen. In allen Fällen ist es wichtig, die Bindung zwischen der Oberfläche des Trägermaterials und dem Gummi so zu gestalten, dass diese nicht die Schwachstelle in dem Verbundsystem darstellt. Daher werden heutzutage die meisten, auch die in der Reifenherstellung benutzten Trägermaterialien zunächst mit Hilfe von Latices ausgerüstet, für die somit ein zunehmender Bedarf besteht. Ganz besonders wichtig ist dabei eine gute Haftung des Kautschuks an der Oberfläche des Trägermaterials. Bei derartigen Latices handelt es sich um Suspensionen der entsprechenden festen Kautschukteilchen in Wasser. Der Einsatz erfolgt häufig in Bindemittelzusammensetzungen die zusätzlich Harze/Härter enthalten und in der Literatur als sogenannte "RFL-Dips" bekannt sind ("Resorcinol-Formaldehyd-Latex-Dips") (siehe z.B. EP-A-0 381 457).

Die US-A-4,452,950 beschreibt ein Verfahren zur Hydrierung der Kohlenstoff-Doppel-bindungen in einem Polymer, das in Form eines Latex vorliegt. Die Hydrierung erfolgt mit Hilfe eines Oxidationsmittels, eines Reduktionsmittels in Form von Hydrazin oder Hydrazinhydrat und eines Metallioneninhibitors. Einsetzbar sind z.B. NBR Latices, die durch wässrige Emulsionspolymerisation erhalten werden, und es ist bevorzugt, diese ohne vorherige Koagulation und ohne organisches Lösungsmittel einzusetzen (Spalte 3, Zeilen 8-11). Diese Latices sind somit Suspensionen der Emulgator-stabilisierten NBR-Partikel in Wasser. Nach der Hydrierung erhält man entsprechend einen HNBR-Latex. Die Beispiele zeigen, dass der erreichbare Hydrierungsgrad bei max. 82% liegt, d.h. mindestens 18% der Doppelbindungen bleiben erhalten. Der Grund für die relativ niedrigen Hydrierungsgrade ist, dass bei höheren Umsätzen der Gelanteil stark ansteigt. Gelteilchen im Latex schwächen aber die mechanischen Eigenschaften daraus hergestellter Gummiwaren. Da die NBR Emulsionspolymerisation in Gegenwart von Emulgatoren durchgeführt wird, enthält der entstehende HNBR-Latex zwangsläufig auch Emulgatoren verbunden mit den weiter unten beschriebenen Nachteilen. Insofern erfüllen derart hergestellte HNBR Latices nicht alle Anforderungen.

Zur Herstellung von Latices, also Suspensionen fester Kautschukteilchen in wässriger Phase, werden ferner Scherverfahren eingesetzt. Hierbei wird eine organische Lösung des Polymers als flüssige organische Phase mit einer wässrigen Phase unter Anwendung hoher Scherleistung in Kontakt gebracht. Dabei sind Emulgatoren oder -gemische mit weiteren Hilfsstoffen entweder in der wässrigen Phase allein oder in beiden Phasen zugegen, um die Emulgierwirkung zu verbessern. Erhalten werden auf diesem Weg Emulsionen, aus denen das Lösungsmittel durch Strippen, Druckentspannung oder andere destillative Verfahren entfernt wird, wodurch zunächst relativ niedrig konzentrierte Suspensionen (teilweise in der Literatur auch als "Dünnlatex" bezeichnet) entstehen. Diese werden z.B. durch weiteres Destillieren, Zentrifugieren oder Aufrahmung auf die gewünschte Endkonzentration gebracht. Derartige Emulgierverfahren sind aber mit hohen Scherleistungen verbunden, um überhaupt feinteilige, stabile Emulsionen (und nach Aufkonzentrierung entsprechende Suspensionen) zu erhalten und die großtechnische Ausführung ist apparativ sehr aufwändig und energieintensiv. Ferner sind größere Mengen an Emulgatoren erforderlich. Dies ist nachteilig, da sich letztere als wasserlöslicher Bestandteil in den Gummi-Compounds wiederfinden, aber nicht mitvulkanisieren, so dass es zu einer Beeinträchtigung der mechanischen Eigenschaften des fertigen Gummiteils kommen kann. Zudem führen sie zu unerwünschten, anbackenden Verschmutzungen in den Formen, die zur Herstellung der Gummiteile verwendet werden. Besonders nachteilig ist ferner, dass Reste von Emulgatoren die Haftung von HNBR auf Trägermaterialien und insbesondere Verstärkerfasern durch ihre oberflächenaktiven Eigenschaften negativ beeinflussen können.

EP-A-0 240 697 beschreibt die analoge Herstellung eines hochgesättigten Nitrilkautschuk Latex. Als hochgesättigte Nitrilkautschuke kommen Copolymere mit Wiederholungseinheiten eines α,β-ungesättigten Nitrils und eines konjugierten Diens zum Einsatz sowie entsprechende Terpolymere mit zusätzlichen Wiederholungseinheiten eines oder mehrerer copolymerisierbarer Termonomeren zum Einsatz. Eine Lösung des hochgesättigten Nitrilkautschuks, der ein Jodzahl von nicht mehr als 120 aufweist, in einem inerten Lösungsmittel, das mit Wasser nicht mischbar ist, wird zu Emulgator-haltigem Wasser gegeben. Durch mechanische Emulgierung, d.h. mittels Energieeintrag wird eine Öl-in-Wasser-Emulsion gebildet, bei der es sich somit um eine flüssig-flüssig Emulsion handelt. Aus dieser wird anschließend das Lösungsmittel durch übliche Destillations-Methoden (Strippung mit Dampf auch als"steam stripping" bezeichnet) entfernt und die verbleibende wässrige Phase aufkonzentriert. Danach liegen die Kautschukmoleküle durch Emulgatormoleküle stabilisiert in Wasser vor, es handelt sich um ein festflüssig System. Neben der Menge Emulgator, die an der Oberfläche der Kautschukpartikel adsorbiert und zur Stabilisierung der Kautschukpartikel notwendig ist, kann die wässrige Phase dabei weiteren überschüssigen Emulgator enthalten. Anschließend wird aus dem Latex durch Zentrifugieren Wasser entfernt, in dem solcher überschüssiger Emulgator in der gleichen Konzentration vorhanden ist, wie in dem Wasser, das im Latex verbleibt. Durch das Zentrifugieren wird daher nur derjenige Teil des Emulgators entfernt, der nicht an der Oberfläche des Kautschuks adsorbiert ist und nicht benötigt wird, um die Kautschukteilchen im Wasser zu stabilisieren. Die maximale Menge Emulgator, die sich durch Zentrifugation überhaupt entfernen lässt, ist somit beschränkt. Würde man darüber hinaus versuchen, dem Latex noch weiteren Emulgator durch Zentrifugieren oder durch andere Methoden zu entziehen, so würde dies zu einer Koagulation des Kautschuks führen und somit zu Teilchen mit mittleren Durchmessern, die weit größer als 1 Mikrometer wären. Auf diesem klassischen Weg der EP-A-0 240 697 zur Herstellung von Latices ist es nicht möglich, feinteilige Kautschukpartikel herzustellen, die nur einen sehr geringem Emulgatorgehalt aufweisen, trotzdem aber stabile Suspensionen ausbilden. EP-A-0 240 697 schildert in der Beschreibung, dass zwecks Erhalt eines stabilen Latex der Einsatz von 1 bis 20 Gew.-Teilen des Emulgators bezogen auf 100 Gew.-Teile HNBR sowie die Einstellung eines pH-Wert von 8-13 erforderlich ist. In Beispiel 2 beträgt die Emulgatorkonzentration, bezogen auf den Kautschuk 5 %. Bei der zur Latex-Herstellung eingesetzten Lösung des gesättigten Nitrilkautschuks kann es sich sowohl um die am Ende der Hydrierung erhaltene und optional weiter verdünnte Lösung handeln oder aber um eine Lösung, die durch Auflösen von festem, bereits isolierten HNBR in einem Lösungsmittel erhalten wird. Die Beispiele der EP-A-0 240 697 setzen ein Lösungsmittelgemisch aus Toluol und Dichlorethan oder aus Cyclohexan und Methylethylketon ein. In der Beschreibung werden prinzipiell als Lösungsmittel aromatische Lösungmittel wie Benzol, Toluol und Xylol, halogenierte Kohlenwasserstoffe wie Dichlorethan und Chloroform oder Ketone wie Methylethylketon und Aceton sowie auch Tetrahydrofuran (THF) genannt. Nach eigenen Untersuchungen können jedoch für das in EP-A-0 240 697 beschriebene Verfahren weder Aceton noch THF eingesetzt werden, da beide Lösungsmittel in jedem Verhältnis mit Wasser löslich sind, daher per se keine Emulsion bilden können und das gesamte Verfahrensprinzip der EP-A-0 240 697 nicht anwendbar ist. Als Emulgatoren werden anionische Emulgatoren eingesetzt, gegebenenfalls in Kombination mit nichtionischen Emulgatoren. Die Größe (d.h. der Durchmesser) der suspendierten und durch entsprechende Emulgatormengen stabilisierte Kautschuk-Teilchen im Latex wird von den verwendeten Emulgierbedingungen, d.h. der Wasser- und Emulgatormenge sowie der Höhe des Energieeintrags (z.B. in Form der Rührgeschwindigkeit) bestimmt und wird mit 0.05 bis 5 µm angegeben. Wesentlich ist, dass es sich hierbei um durch Emulgator stabilisierte Polymerteilchen in Suspension handelt. Der HNBR enthält keinen oder nur einen geringen Gelanteil. In den Beispeilen experimentell beschrieben werden Emulgator-stabilisierte Latices mit einem Feststoffanteil (Kautschuk) von ca. 45%, einem pH-Wert im Bereich von 9 bis 9,5 und einem per Elektronenmikroskop bestimmten mittleren Teilchendurchmesser von 0,32 bis 0,61 µm Ein weiterer Nachteil dieses Verfahrens ist, dass bei mechanischen Emulgierverfahren die Partikelgrößenverteilung zwangsläufig breit ist. Ferner wird der Stoffaustausch aus den Partikeln durch Emulgatoren an der Phasengrenzfläche behindert, was die Entfernung von noch im Partikel enthaltenen Lösungsmittels durch übliches Eindampfen/Abdestillieren erschwert. Aufgrund des Emulgatorgehalts ist bei der Aufkonzentrierung mit Schaumbildung zu rechnen, was die praktische Umsetzung der Lösungsmittelentfernung zusätzlich erschwert, insbesondere für eine großtechnische Umsetzung. Schließlich ist auch der Zentrifugationsschritt problematisch. Die in EP-A-0 240 697 angegebenen 15 Minuten bei 3000 Umdrehungen pro min, die zur Entfernung von überschüssigem Emulgator sowie zur Aufkonzentrierung des Latex erforderlich sind, stellen für eine Produktion im technischen Maßstab ein erhebliches Hindernis dar. Aus der Tatsache, dass eine Aufkonzentrierung des Latex mit der Zentrifuge gelingt, folgt zwangsläufig auch eine begrenzte Lagerstabilität gegen Sedimentation. Wie bereits beschrieben wird die Entfernung des Emulgators nicht vollständig gelingen. Reste an Emulgatoren sind aber, wie schon dargestellt nachteilig.

In der EP-A-0 704 459 wird prinzipiell das gleiche Verfahren wie in der EP-A-0 240 697 zur Herstellung wässriger Emulgator-stabilisierter HNBR-Latices beschrieben, das dort als "phase reversal of emulsion" bezeichnet wird. Auch gemäß EP-A-0 285 094 erfolgt die Herstellung von HNBR-Co- oder Terpolymer-Latices, indem man eine organische Lösung des HNBR mit einer emulgatorhaltigen wässrigen Phase mischt, dadurch eine flüssig-flüssig Öl-in-Wasser Emulsion erhält, und anschließend das Lösungsmittel entfernt, wodurch eine emulgatorhaltige HNBR Suspension in Wasser erhalten wird. Um eine stabile Suspension zu erhalten, muss die Emulgierung unter hohem Energieeintrag mittels starkem Rühren durchgeführt werden. Die weitere Aufarbeitung verläuft identisch zur EP-A-0 240 697. Es werden Latices mit Feststoffkonzentrationen von ca. 45 Gew.% und einem pH-Wert von 9 bis 9,5 erhalten. Weder EP-A-0 704 459 noch EP-A-0 285 094 liefern eine Lehre oder Hinweise, wie feinteilige HNBR Latices hergestellt werden können, die ohne Einsatz größerer Mengen Emulgator eine ausreichende Stabilität besitzen und nicht agglomerieren.

Auch aus EP-A-0 252 264 ist die Herstellung von HNBR Latices zwecks Beschichtung von Trägermaterialien bekannt. Hierbei wird das HNBR Polymer zunächst in einem organischen Lösungsmittel oder einem Lösungsmittelgemisch gelöst, welches entweder eine geringe Wasserlöslichkeit aufweist und mit Wasser ein Azeotrop mit über 50% Anteil des Lösungsmittels bildet oder einen Siedepunkt unterhalb 95°C besitzt. Als organische Lösungsmittel werden 3-Chlortoluol, Diisobutylketon, Methylisobutylketon und Methyliso-propylketon genannt. Die resultierende organische Phase wird nach an sich bekannten Techniken unter Verwendung von anionischen, kationischen oder nicht-ionischen Emulgatoren oder Methylcellulose in Wasser emulgiert. Anschließend erfolgt eine Entfernung des organischen Lösungsmittels durch bekannte Methoden wie Destillieren. Erhältlich sind auf diesem Weg z.B. Latices mit einem Feststoffgehalt von bis zu 19 % und einer mittleren Teilchengröße von 480 µm (Beispiel 2). Eine derartige Teilchengröße ist jedoch viel zu groß, um noch als "Latex" im engeren Sinne bezeichnet zu werden. Als Komponente für einen Dip zwecks Beschichtung von Trägermaterialien ist der Latex daher in der betrieblichen Praxis ungeeignet. Auch hat dieses Verfahren wegen des Emulgatorgehalts die gleichen Probleme wie das Verfahren der EP-A-0 240 697.

Aus der EP-A-0 863 173 ist ein Verfahren zur Herstellung von stabilen, feinteiligen Emulgator-stabilisierten Polymersuspensionen mit Polymerteilchengrößen von 0,1 bis 50,0 µm, besonders bevorzugt 0,1 bis 2 µm (d₅₀ bestimmt durch Ultrazentrifuge gemäß J. Coll. Polym. Sci, 267 (1989), 1113) bekannt. Hierbei wird zunächst eine Wasser-in-Öl Emulsion durch Einwirkung von Scherung in eine Öl-in-Wasser Emulsion umgekehrt (Phaseninversion). Die eingesetzte Wasser-in-Öl Emulsion besteht aus einer organischen Phase eines mit Wasser nicht mischbaren, organischen Lösungsmittels, in dem das Polymer gelöst ist, und einer wässrigen Phase. Zwecks erfolgreicher Durchführung dieses Verfahrens ist es wesentlich, dass die organische Phase eine spezielle Viskosität im Bereich von 1,0 bis 20.000 mPa x s (gemessen bei 25°C) besitzt, die Grenzflächenspannung zwischen organischer und wässriger Phase 0,01 bis 30 mN/m beträgt, die Teilchengröße des in der organischen Phase emulgierten Wassers 0,2 bis 50 µm beträgt und das Volumenverhältnis von organischer zu wässriger Phase im Bereich von 80:20 bis 20:80 liegt. Die Scherung muss ferner mit einer speziellen Scherleistung von 1 x 10³ bis 1 x 10⁸ Watt pro cm³ durchgeführt werden. Für dieses Scherverfahren werden die unterschiedlichsten Polymere als einsetzbar aufgezählt, unter anderem auch gegebenenfalls hydrierter Nitrilkautschuk. Auch für dieses Phaseninversionsverfahren wird der Einsatz von Emulgatoren als erforderlich beschrieben, in den Beispielen werden 4.7 Gew.-Teile auf 100 Gew.-Teile Polymer eingesetzt. Die Entfernung des organischen Lösungsmittels erfolgt in üblicher Weise, z.B. durch Destillation, Druckentspannung, Umkehrosmose, Cyclonentgasung oder Düsenversprühung. Der Schwerpunkt der EP-A-0 863 173 liegt auf Butylkautschuken und halogenierten Butylkautschuken. Hier lassen sich mit dem speziellen Scherverfahren Latices mit Kautschukteilchengrößen von im Mittel 0,28 bis 1,9 µm generieren.

Die vorgenannten Dokumente aus dem Stand der Technik haben den gemeinsamen Nachteil, dass die erhaltenen Latices größere Mengen an Emulgatoren aufweisen. Diese Emulgatoren stammen entweder aus der Emulsionspolymerisation des NBR selber oder müssen bei der Herstellung des Latex zwecks Stabilisierung der Öl-in-Wasser-Emulsion, die als Zwischenstufe zur Herstellung des Latex durchlaufen wird, separat zugegeben werden. Ohne Emulgator ist keine stabile Öl-in-Wasser-Emulsion erreichbar, d.h. der Emulgator wird benötigt, um die Stabilität der flüssigen "Öl"-Phase (Kautschuk in Lösungsmittel) zu erreichen. Zu diesem Zeitpunkt liegt der Kautschuk noch nicht als Feststoff vor. Ohne Emulgator koaleszieren die entstehenden Tropfen sofort wieder, und es ist unmöglich, eine feinteilige Suspension nach einem Eindampfprozess zu erreichen. Die Nachteile der Emulgatoranwesenheit wurden bereits ausführlich beschrieben.

Ausgehend vom Stand der Technik bestand somit die **Aufgabe der vorliegenden Erfindung** darin, besonders feinteilige und trotzdem stabile wässrige Suspensionen von ganz oder teilweise hydrierten Nitrilkautschuken mit hoher Feststoffkonzentration bereitzustellen, deren Emulgatorgehalt möglichst gering sein sollte. Der Anteil an Doppelbindungen sollte ferner in einem breiten Bereich einstellbar sein, vor allem sollte ein Gehalt von weniger als 5% erreichbar sein. Die feinteilige Suspension sollte möglichst kein Gel enthalten. Ferner bestand die Aufgabe darin, die Herstellung solcher Suspensionen über ein einfaches und apparativ unaufwändiges Verfahren zu ermöglichen.

**Überraschend wurde gefunden,** dass stabile, feinteilige wässrige Suspensionen erhalten werden können, wenn man spezielle, durch Carboxylgruppen funktionalisierte, ganz oder teilweise hydrierte Nitrilkautschuke aus organischer Lösung unter Zugabe einer wässrigen Phase mit einem pH von mindestens 6 ausfällt und ein oder mehrere organische Lösungsmittel einsetzt, die sich unter den gewählten Fällbedingungen vollständig mit Wasser in jedem Verhältnis mischen. Hierfür ist eine Emulgatorzugabe im Gegensatz zum Stand der Technik nicht erforderlich. Diese Suspensionen zeichnen sich somit über einen sehr geringen Emulgatorgehalt oder sogar Emulgatorfreiheit aus.

**Gegenstand der Erfindung** ist somit eine wässrige Suspension eines carboxylgruppen-haltigen, ganz oder teilweise hydrierten Nitrilkautschuks, die sich durch einen Emulgatorgehalt von maximal 1 Gew.-Teil bezogen auf 100 Gew.-Teile des carboxylgruppenhaltigen, ganz oder teilweise hydrierten Nitrilkautschuks auszeichnet, wobei der carboxylgruppenhaltige ganz oder teilweise hydrierte Nitrilkautschuk in der Suspension einen mittleren Teilchendurchmesser im Bereich von 0,01 bis 0,9 Mikrometern besitzt, gemessen mittels dynamischer Lichtstreuung.

Die dynamische Lichtstreuung wird auch als Photonen-Korrelations-Spektroskopie bezeichnet. Bevorzugt liegt der mittlere Teilchendurchmesser des carboxylgruppenhaltigen, ganz oder teilweise hydrierten Nitrilkautschuks in der erfindungsgemäßen Suspension (bestimmt durch dynamische Lichtstreuung) im Bereich von 0,05 bis 0,8 Mikrometern und besonders bevorzugt im Bereich von 0,08 bis 0,5 Mikrometern.

Alternativ zur Methode der dynamischen Lichstreuung kann auch die Methode der Laserbeugung eingesetzt werden, um den Durchmesser der Teilchen des in der erfindungsgemäßen Suspension vorhandenen carboxylgruppenhaltigen, ganz oder teilweise hydrierten Nitrilkautschuks zu bestimmen. Der Teilchendurchmesser wird hierbei als sogenannter dₓ-Wert (mit x maximal 100) bestimmt. Die Auswertung erfolgt dabei intensitätsgewichtet. Der über die Laserbeugung bestimmte, für einen dₓ Wert angegebene Teilchendurchmesser von y Mikrometern bedeutet, dass x % der Teilchen einen Durchmesser von y Mikrometern oder kleiner besitzen. Im Sinne dieser Teilchendurchmesser d₅₀ von 0,01 Mikrometern aufweisen (also 50 % der Teilchen einen Durchmesser von maximal 0,01 Mikrometern besitzen), bis hin zu Suspensionen, die einen Teilchendurchmesser d₅₀ von 0,9 Mikrometern aufweisen (also 50 % der Teilchen einen Durchmesser von maximal 0,9 Mikrometern besitzen).

Die erfindungsgemäße Suspension besitzt bezüglich des carboxylgruppenhaltigen, ganz oder teilweise hydrierten Nitrilkautschuks üblicherweise eine Feststoffkonzentration von 5 bis 65 Gew.-%, bevorzugt von 20 bis 60 Gew.-%, besonders bevorzugt von 25 bis 55 Gew.-% und insbesondere von 25 bis 51 Gew.-%. Sie weist ferner faktisch keine Gelanteile auf.

Der pH-Wert erfindungsgemäßer Suspensionen ist üblicherweise größer gleich 4, bevorzugt größer gleich 6 und ganz besonders bevorzugt größer gleich 8. Weiterhin ist der pH-Wert erfindungsgemäßer Suspensionen kleiner gleich 14, bevorzugt kleiner gleich 13 und besonders bevorzugt kleiner gleich 12. Somit liegt der pH-Wert der Suspensionen üblicherweise im Bereich von 4 bis 14, bevorzugt 6 bis 12, besonders bevorzugt 8 bis 12.

Die Suspensionen, die auch "Latices" genannt werden können, weisen bevorzugt maximal 0,5 Gew.-Teile und besonders bevorzugt weniger als 0,09 Gew.-Teile Emulgator, bezogen auf 100 Gew.-Teile des carboxylgruppenhaltigen, ganz oder teilweise hydrierten Nitrilkautschuks auf. Sie zeichnen sich somit durch eine nur sehr geringe Menge an Emulgator oder sogar die völlige Abwesenheit von Emulgator aus. Sofern noch Emulgator bis zum o.g. Grenzwert von 1 Gew.-Teil in der Suspension enthalten ist, stammt dieser z.B. aus der Herstellung des carboxylgruppenhaltigen Nitrilkautschuks selber, die üblicherweise als Emulsionspolymerisation durchgeführt wird, wobei der Emulgator in gewissen Mengen je nach Aufarbeitungs-/Aufreinigungsverfahren auch die Folgestufe, d.h. die Hydrierung, mitdurchläuft und sich im Produkt wiederfindet. Das erfindungsgemäße Verfahren hebt sich jedoch gerade dadurch von den beschriebenen Verfahren des Standes der Technik ab, dass bei der Herstellung der sehr feinteiligen, stabilen Suspension über das erfindungsgemäße Verfahren eben kein Emulgator bei der Fällung zugesetzt werden muss: Die Ausfällung des carboxylgruppenhaltigen, ganz oder teilweise hydrierten Nitrilkautschuks führt auch ohne Emulgatorzusatz zu den gewünschten stabilen Suspensionen. Die hervorragende Stabilität manifestiert sich darin, dass die Suspensionen mit hoher Feststoffkonzentration über mehrere Monate separations- und agglomerationsstabil sind. Diese Separationsstabilität lässt sich z.B. über die Lichtrückstreuung der erfindungsgemäßen Suspensionen ("Backscattering") mittels eines TURBISCAN ma 2000 der Firma Formulation SA, bestimmen: Hierbei zeigt sich auf der Langzeitachse nur ein als vernachlässigbar einzustufender Rückgang des Anteils rückgestreuten Lichts. Mittels Photonen-Korrelations-Rückgang des Anteils rückgestreuten Lichts. Mittels Photonen - Korrelations - Spektroskopie ist darüber hinaus die Agglomerationsstabilität zu bestimmen: Hier zeigt sich, dass sich der mittlere Teilchendurchmesser auch bei längerer Lagerung der Suspensionen nicht verändert.

**Gegenstand der Erfindung** ist ein Verfahren zur Herstellung einer wässrigen Suspension eines carboxylgruppenhaltigen, ganz oder teilweise hydrierten Nitrilkautschuks, dadurch gekenn-zeichnet, dass
1) ein carboxylgruppenhaltiger, ganz oder teilweise hydrierter Nitrilkautschuk zunächst in einem organischen Lösungsmittel unter Ausbildung einer organischen Phase gelöst wird,
2) anschließend die organische Phase mit einer wässrigen Phase, die einen pH-Wert von mindestens 6 besitzt, in Kontakt gebracht wird, wobei sich das Wasser im organischen Lösungsmittel ganz oder teilweise löst, der carboxylgruppenhaltige, ganz oder teilweise hydrierte Nitrilkautschuk ausfällt und sich somit eine Suspension bildet, und
3) das organische Lösungsmittel ganz oder teilweise entfernt wird,
wobei ein oder mehrere organische Lösungsmittel eingesetzt werden, die sich unter den gewählten Fällbedingungen vollständig mit Wasser in jedem Verhältnis mischen.

Im erfindungsgemäßen Verfahren werden ein oder mehrere organische Lösungsmittel eingesetzt. , die sich unter den gewählten Fällbedingungen (Temperatur und Druck) vollständig mit Wasser in jedem Verhältnis mischen. Als organische Lösemittel können z.B. Aceton, Methylethylketon, Ameisensäure, Essigsäure, Tetrahydrofuran, Dioxan oder Mischungen aus zwei oder mehr dieser Lösungsmittel eingesetzt werden. Bevorzugt sind Aceton und Tetrahydrofuran.

In Schritt 1) des erfindungsgemäßen Verfahrens wird der carboxylgruppenhaltige, ganz oder teilweise hydrierte Nitrilkautschuk im organischen Lösungsmittel unter Ausbildung der "organischen Phase" gelöst. Hierbei handelt es sich typischerweise um ein vollständiges Lösen. Die Konzentration des carboxylgruppenhaltigen, ganz oder teilweise hydrierten Nitrilkautschuks in der organischen Phase (d.h. Summe aus Lösungsmittel und Nitrilkautschuk) liegt üblicherweise bei 0,1 Gew.% bis 30 Gew.%, bevorzugt bei 1 Gew.% bis 20 Gew.% und besonders bevorzugt bei 2 Gew.% bis 18 Gew.%.

Die Herstellung der organischen Phase erfolgt, indem entweder der carboxylgruppenhaltige, ganz oder teilweise hydrierten Nitrilkautschuk direkt in der gesamten vorgesehenen Menge organischen Lösungsmittels aufgelöst wird oder aber zunächst in einer kleineren Menge, d.h. in höherer Konzentration, gelöst und anschließend durch weitere Zugabe von Lösungsmittel verdünnt wird. Das Lösen erfolgt bei einer Temperatur im Bereich von 0°C bis 200°C, bevorzugt im Bereich von 10°C bis zur Siedetemperatur des verwendeten Lösungsmittels bei Normaldruck.

Die resultierende organische Phase enthält gegebenenfalls kleine Mengen Wasser und basischer Substanzen. Diese können z.B. aus der Polymerisation und Aufarbeitung des carboxylgruppenhaltigen Nitrilkautschuks stammen und auch über die Hydrierung hinaus darin erhalten geblieben sein. Ferner können diese kleine Mengen Wasser und basischer Substanzen auch über das verwendete Lösungsmittel in die organische Phase eingetragen worden sein, dies insbesondere dann, wenn Lösungsmittel recycliert wird. Es hat sich bewährt, dass der carboxylgruppenhaltige, ganz oder teilweise hydrierte Nitrilkautschuk im Fall der Gegenwart kleiner Mengen Wasser und basischer Substanzen trotzdem noch im organischen Lösungsmittel löslich ist. Die Restmenge an Wasser im Lösungsmittel, das für die Lösung des Kautschuks verwendet wird, ist bevorzugt kleiner als 7 Gew-% und besonders bevorzugt weniger als 2 Gew-%. Bildet das Lösungsmittel mit Wasser ein Azeotrop und ist der carboxylgruppenhaltige, ganz oder teilweise hydrierte Nitrilkautschuk in dem Azeotrop löslich, so wird zur Erleichterung der anschließenden Aufarbeitung des Lösungsmittels bevorzugt eine organische Phase in Form einer azeotropen Mischung aus Lösungsmittel und Wasser oder einer Mischung von Lösungsmittel und Wasser, deren Siedepunkt sich nur wenig (+/- 2°C) von dem der azeotropen Mischung unterscheidet, eingesetzt. Wird THF als Lösungsmittel eingesetzt, so liegen in einem Azeotrop THF/Wasser 6 Gew.-% oder weniger Wasser vor, abhängig vom Druck, bei dem die Destillation durchgeführt wurde. Wird frisches Lösemittel eingesetzt, so weist dieses in der Regel keine basischen Substanzen auf. Wird aus einer vorgegangenen Durchführung des erfindungsgemäßen Verfahrens recycliertes Lösemittel eingesetzt, so kann noch ein Restgehalt an Base, die in dem Trennungsschritt nicht abgetrennt wurde, mit einer Konzentration von bevorzugt kleiner als 0,1 mol/L, und besonders bevorzugt kleiner als 0,01 mol/L vorliegen. In einer bevorzugten Ausführung des Verfahrens ist es auch möglich, die ganze basische Komponente der Polymerlösung zuzugeben und mit neutralem Wasser zu fällen.

In Schritt 2) wird die organische Phase, die den carboxylgruppenhaltigen, ganz oder teilweise hydrierten Nitrilkautschuk in gelöster Form enthält, mit einer wässrigen Phase, die einen pH-Wert von mindestens 6 besitzt, in Kontakt gebracht wird, wobei sich das Wasser ganz oder teilweise im Lösungsmittel löst, der carboxylgruppenhaltige, ganz oder teilweise hydrierte Nitrilkautschuk ausfällt und sich eine Suspension bildet.

Die Temperatur der organischen Phase vor Zugabe der wässrigen Phase ist üblicherweise größer als 0°C und kleiner als die Siedetemperatur des organischen Lösemittels bei dem Druck, bei dem die Fällung durchgeführt wird. Bevorzugt liegt sie im Bereich von 10°C bis 50°C. Die Fällung kann im Prinzip bei jedem Druck durchgeführt werden, bevorzugt wird bei Normaldruck gearbeitet.

In einer weiteren bevorzugten Variante kann die wässrige Phase auch mit einer Wasserdampfphase vermischt sein. Unter diesen Bedingungen verdampft ein Teil des Lösungsmittels unmittelbar bei der Fällung unter Kondensation von Wasser, wodurch die anschließende Aufarbeitung vereinfacht wird. Bevorzugt wird die Fällung dann in einer Düse durchgeführt.

Für die Durchführung des erfindungsgemäßen Verfahrens ist es wichtig, dass die für die Ausfällung verwendete wässrige Phase einen pH-Wert von mindestens 6, bevorzugt einen pH-Wert im Bereich von 7 bis 14 und besonders bevorzugt im Bereich von 9 bis 13 besitzt.

Üblicherweise wird der pH-Wert der wässrigen Phase durch Zugabe von einer oder mehreren basischen Substanzen eingestellt, bevorzugt von Natriumhydroxid, Kaliumhydroxid, Lithiumhydroxid, Natriumcarbonat, Kaliumcarbonat, Lithiumcarbonat, Natriumphosphat, Kaliumphosphat, Lithiumphosphat, Ammoniak, primären, sekundären oder tertiären aliphatischen oder aromatischen Aminen, besonders bevorzugt von primären aliphatischen Aminen mit Kohlenwasserstoffresten mit 1 bis 20 C-Atomen, insbesondere Methylamin und Ethylamin, von sekundären aliphatischen Aminen mit Kohlenwasserstoffresten mit 1 bis 20 C-Atomen mit gleicher oder unterschiedlicher Seitenkettenlänge, insbesondere Dimethylamin, Diethylamin, Dipropylamin, Dibutylamin, Methylethylamin, Methylpropylamin, Ethylpropylamin oder Diisopropylamin, sowie von tertiären aliphatischen Aminen mit Kohlenwasserstoffresten mit 1 bis 20 C-Atomen mit gleicher oder unterschiedlicher Seitenkettenlänge, insbesondere Tripropylamin, Triethylamin, Trimethylamin, Dimethylethylamin oder Methylethylpropylamin, oder deren Derivaten.

Weiterhin ist es auch möglich, die basische Substanz(en) mit anorganischen mono-, di- oder trivalenten Salzen wie z. B. Natriumchlorid, Calciumchlorid oder Aluminiumchlorid in Konzentrationen unterhalb der Kritischen Koagulationskonzentration des Latex zu mischen. Bevorzugt ist die Konzentration an derartigen Salzen in der wässrigen Phase geringer als 0,1 mol/L. Auch Säuren wie z.B. anorganische Säuren, bevorzugt Salzsäure, Schwefelsäure, Phosphorsäure oder Salpetersäure, oder organische Säuren, bevorzugt Ameisensäure, Essigsäure oder Propionsäure, sowie deren Salze, können zugesetzt werden, um den gewünschten pH-Wert zu erreichen.

Dem Fachmann sind die Regeln des Säure-Base-Gleichgewichts bekannt, die man benötigt, um einen pH-Wert im zuvor angegebenen Bereich einzustellen. Bei der bevorzugten Verwendung von Aminen ist es sinnvoll, die Base in der wässrigen Phase mit einer Konzentration von 0,0001 mol/l bis 5,6 mol/l, bevorzugt 0,001 bis 1,2 mol/l und besonders bevorzugt 0,01 bis 0,5 mol/l einzusetzen.

Als Wasser kann Wasser in Brauchwasserqualität oder Wasser mit geringeren Gehalten an Ionen eingesetzt werden; bevorzugt wird Wasser mit einem niedrigen Gehalt an Ionen eingesetzt, besonders bevorzugt ist vollentsalztes Wasser.

In einer alternativen Ausführungsform kann beim erfindungsgemäßen Verfahren auch so vorgegangen werden, dass die eingesetzte wässrige Phase, mit der die organische Phase in Schritt 2) in Kontakt gebracht wird, nicht über den zuvor genannten basischen pH Wert verfügt, sondern vielmehr einen pH-Wert von minimal 3, bevorzugt von 4 bis 8, besonders bevorzugt von 5 bis 8 besitzt, sofern in der organischen Phase eine solche Menge an Base vorhanden ist, dass sich beim Inkontaktbringen von organischer und wässriger Phase in Schritt 2) ein pH-Wert im Bereich von mindestens 6, bevorzugt 7 bis 14 und besonders bevorzugt von 9 bis 13 einstellt. Die Mengen an Base in der organischen Phase können wie weiter oben beschrieben aus der Polymerisation und Aufarbeitung des carboxylgruppenhaltigen Nitrilkautschuks bzw. der Verwendung recyclierten Lösungsmittels stammen. Bei dieser alternativen Ausführungsform ist es dann nicht erforderlich, der wässrigen Phase separat eine Base zuzusetzen.

Das Lösen des carboxylgruppenhaltigen, ganz oder teilweise hydrierten Nitrilkautschuks kann in üblichen Gefäßen oder Reaktoren erfolgen. Eine bevorzugte Variante sind gerührte Behälter, ausgestattet mit üblichen und dem Fachmann bekannten Rührorganen, wie z.B. Schrägblattrührern, Propellerrührern, Kreuzbalkenrührern, Blattrührern, Gitterrrührern oder Impellerührern. Die gerührten Behälter können mit Stromstörern ausgerüstet sein.

Anschließend wird diese organische Phase mit der wässrigen Phase in Kontakt gebracht und der carboxylgruppenhaltige, ganz oder teilweise hydrierte Nitrilkautschuk fällt aus und es bildet sich die erfindungsgemäße Suspension.

Bei dieser Fällung wird der Nitrilkautschuk aus der organischen Phase durch Zusatz von Fällungsmittel, hier Wasser mit dem angegebenen pH-Wert, als vollständig oder teilweise unlöslicher Feststoff ausgeschieden. Dies kann verfahrenstechnisch in verschiedenen Varianten geschehen. Eine bevorzugte Variante der Fällung ist, die wässrige Phase in einen gerührten Behälter zulaufen zu lassen, der die organische Lösung des carboxylgruppen-haltigen, ganz oder teilweise hydrierten Nitrilkautschuks enthält. Bevorzugt wird die Zugabe über einen Kippzulauf in möglichst kurzer Zeit unter 100 Sekunden, besonders bevorzugt unter 30 Sekunden durchgeführt. Der gerührte Behälter ist mit üblichen und dem Fachmann bekannten Rührorganen ausgestattet. Bevorzugt sind mehrstufige Rührer wie beispielsweise mehrstufige Schrägblattrührer oder mehrstufige MIG-Rührer. Der Leistungseintrag in dem Rührbehälter beträgt bevorzugt zwischen 3 und 0,001 W/1, besonders bevorzugt zwischen 0,3 und 0,01 W/1. Neben dem Rührorgan sind die Rührbehälter üblicherweise mit Stromstörern ausgerüstet. Die für die Fällung notwendige Zeit ergibt sich aus der Summe der Zugabezeit und der Mischzeit. Die Mischzeit für einen technisch betriebenen Rührkessel ist, wie dem Fachmann bekannt, typischerweise niedrig, im Bereich von 100 Sekunden oder niedriger. Der volumenbezogene spezfische Energie-Eintrag berechnet sich aus der für die Fällung notwendigen Zeit, multipliziert mit dem Leistungseintrag. Der Energieeintrag für die Fällung ist also, wie sich aus den Zahlenangaben oben berechnen lässt, bevorzugt kleiner als 6*10⁵ J/m³ und besonders bevorzugt kleiner als 3,3*10⁴ J/m³.

Eine weitere bevorzugte Variante der Fällung ist es, die organische Phase mit der wässrigen Phase kontinuierlich in Kontakt zu bringen. Besonders bevorzugt ist hierbei der Einsatz einer Mischdüse, eine weitere bevorzugte Variante arbeitet mit einem Statikmischer. In einer weiteren bevorzugten Variante werden eine Mischdüse und ein Statikmischer hintereinandergeschaltet. Mischdüsen und Statikmischer sind dem Fachmann bekannt und können dem Stand der Technik entsprechend ausgelegt werden. Die Druckverluste in den Mischdüsen und Statikmischern sind bevorzugt geringer als 10 bar, besonders bevorzugt geringer als 1 bar und ganz besonders bevorzugt geringer als 100 mbar. Der volumenbezogene spezifische Energieeintrag lässt sich, wie dem Fachmann bekannt ist, direkt aus dem Druckvelust berechnen und beträgt damit bevorzugt geringer als 10⁶ J/m³, besonders bevorzugt geringer als 10⁵ J/m³ und ganz besonders bevorzugt geringer als 10⁴ J/m³. Ferner können auch andere aus dem Stand der Technik bekannte Mischapparate Verwendung finden. Dies können z.B. kontinuierlich betriebene Rührkessel oder Rotor-Stator-Systeme sein. Bei kontinuierlich betriebenen Rührkesseln zur Fällung kann die Dosierung beider Komponenten beispielsweise kontinuierlich oder wechselweise (gepulst) erfolgen.

Prinzipiell sind technische Verfahren mit niedrigen Energieeinträgen vorzuziehen, da sie Energie sparen und weniger aufwändige und teure Apparate erfordern.

Das Massenverhältnis der den carboxylgruppenhaltigen ganz oder teilweise hydrierten Nitrilkautschuk enthaltenden organischen Lösung zur wässrigen Phase liegt üblicherweise bei 50:1 bis 1:1, bevorzugt bei 30:1 bis 3:1 und besonders bevorzugt bei 15:1 bis 4:1.

Bei der Fällung in Schritt 2) ist es in Einzelfällen möglich, dass abhängig von den Fäll-bedingungen ein geringer Teil des carboxylgruppenhaltigen ganz oder teilweise hydrierten Nitrilkautschuks in Form gröberer Partikel mit Teilchendurchmessern von mehr als 5 Mikro-metern ausfällt. Dieser Anteil grobkörniger Partikel liegt aber üblicherweise bei maximal 2% bezogen auf die gesamte ausgefallene Partikelmenge, häufig auch deutlich darunter. Es empfiehlt sich, diesen grobkörnigen Anteil durch Absetzen, Dekantieren oder Filtrieren zu entfernen. Er kann wieder gelöst und in die Fällung in Schritt 1) zurückgeführt werden.

Im nächsten Schritt wird das organische Lösungsmittel aus der in Schritt 2) erhaltenen Suspension ganz oder teilweise entfernt. Es hat sich bewährt, dass die nach Schritt 3) vorliegende erfindungsgemäße feinteilige Suspension noch maximal 0,5 Gew.%, bevorzugt maximal 0,1 Gew.% Lösungsmittel, bezogen auf die gesamte Suspension enthält.

Optional kann zwecks Einstellung einer gewünschten Konzentration entweder gleichzeitig oder anschließend an die Lösungsmittelentfernung in einem weiteren Schritt ein gewisser Teil des Wassers sowie die basische(n) Substanze(n) ganz oder teilweise entfernt werden.

Im Anschluss an Schritt 3) liegt der Kautschuk als feinteilige Suspension mit einem mittleren Teilchendurchmesser bestimmt durch dynamische Lichtstreuung im Bereich von 0,05 bis 0,9 Mikrometer vor. Sofern vorher grobkörnige Anteile abgetrennt wurden, erfolgt die Bestimmung des mittleren Teilchendurchmessers erst nachdem diese grobkörnigen Anteile abgetrennt wurden. Es hat sich bewährt, grobkörnige Partikel mit einem Durchmesser von mindestens 5 Mikrometern abzutrennen.

Die Entfernung des Lösungsmittels sowie die optionale weitere Aufkonzentrierung kann z.B. dadurch geschehen, dass die durch Fällung erhaltene Suspension eingedampft wird. Bevorzugt wird die Suspension dafür erhöhten Temperaturen und/oder verringertem Druck ausgesetzt. Die Temperatur liegt bevorzugt in einem Bereich von 30 bis 100°C, der Druck bevorzugt in einem Bereich von 20 bis 1000 mbar (absolut). Die Eindampfung erfolgt in dem Fachmann bekannten Geräten wie z.B. einem gerührten Behälter, einem Fallfilmverdampfer, einem Umlaufverdampfer oder einer Destillationskolonne. Bevorzugt wird ein Rührkessel. Eventuelles Anhaften der Suspension an gegebenen Oberflächen der Geräte und Rohrleitungen kann durch geeignete Beschichtungen mit geringer Oberflächenenergie, beispielsweise Fluorpolymere wie PTFE oder PVDF minimiert werden.

In einer bevorzugten Methode der Aufkonzentrierung durch Eindampfen im Rührkessel gibt es verschiedene Varianten, die im Weiteren als "Batch", "Fed Batch" und "Konti" bezeichnet werden.

In der Variante **"Batch"** wird die Suspension am Anfang der Eindampfung in dem Rührbehälter vorgelegt und unter schrittweiser oder kontinuierlicher Absenkung des Druckes und/oder schrittweiser oder kontinuierlicher Anhebung der Temperatur bis zur gewünschten Konzentration an Wasser und Restlösungsmittel eingedampft. Wenn die Fällung in einem gerührten Behälter durchgeführt wurde, kann die Eindampfung vorteilhafterweise im gleichen Rührbehälter geschehen. Da in dieser Variante die Menge an Suspension im Verhältnis zu den Ausgangsstoffen sehr klein ist, kann es günstig sein, die Eindampfung abzubrechen, wenn 50-90% des Gesamtvolumens im Rührbehälter verdampft sind, und die Eindampfung in einem weiteren Rührbehälter fortzusetzen. Gegebenenfalls kann es auch sinnvoll sein, Suspensionen aus verschiedenen Ansätzen zusammenzufassen und die Eindampfung in dem gleichen oder einem anderen Rührbehälter fortzusetzen.

In der Variante **"Fed Batch"** wird der Rührbehälter zunächst mit Suspension aus der Fällung gefüllt und die Eindampfung begonnen. In dem Maße, wie durch Verdampfen Lösungsmittel und Wasser abgezogen wird, wird frische Suspension aus der Fällung zugeführt, so dass der Füllstand im Rührbehälter ungefähr gleich bleibt. Gegen Ende wird die Zufuhr frischer Suspension aus der Fällung beendet und die Resteindampfung vorgenommen. Die Zufuhr an Suspension kann dabei entweder aus einer kontinuierlichen Fällung oder beispielsweise aus einer absatzweisen Fällung in einem Rührkessel erfolgen.

In den Varianten "Batch" oder "Konti" wird in einer bevorzugten Ausführung ein Strom des Behälterinhalts aus dem Behälter entnommen, über einen Wärmetauscher aufgewärmt und wieder in den Behälter zurückgeführt, um einen verbesserten Eintrag an Wärme und damit eine verkürzte Eindampfzeit zu erreichen.

In einer weiteren bevorzugten Ausführungsform der Varianten "Batch" oder "Konti" wird ebenfalls ein Strom des Behälterinhalts aus dem Behälter entnommen, diesem Strom dann über einen zweiphasig betriebenen Wärmetauscher wie z.B. einen Fallfilmverdampfer, ein mehrphasig betriebenes Wendelrohr, einen mehrphasig betriebenen Rohrbündelwärmetauscher oder einen Dünnschichtverdampfer Energie in Form von Wärme oder für den Fall des Dünnschichtverdampfers in Form von Wärme und mechanischer Energie zugeführt und zudem ein Teil des Lösemittels in gasförmiger Form durch Verdampfung entzogen.

In der Variante **"Konti"** wird einem Rührbehälter ein im Wesentlichen kontinuierlicher Strom an Suspension zugeführt. "Im wesentlichen kontinuierlich" heisst, dass der Strom auch für eine gewisse Zeit unterbrochen werden kann. Durch Abdampfen werden ständig Lösungsmittel und Wasser entfernt. Ein Auslassstrom wird dem Rührbehälter entnommen, so dass sich der Füllstand des Behälters nach Abschluss von eventuellen Befüllvorgängen nicht mehr ändert. Abhängig von Druck und Temperatur im Eindampfkessel enthält die so eingedampfte Suspension noch gewisse Mengen an Lösungsmittel, so dass im Anschluss daran vorteilhaft eine Eindampfung im "Fed Batch" oder "Batch" - Verfahren erfolgt.

Aus Gründen der Stabilität der Suspension hat sich ein Eindampfprozess bewährt, bei dem die Suspension den ganzen Prozess hindurch bei pH-Werten im Bereich von 6 bis 13, besonders bevorzugt 8 bis 13 gehalten wird. Abhängig von der verwendeten Base kann es empfehlenswert sein, vor, während und/oder nach der Eindampfung Basen oder Säuren zu der Suspension zuzugeben, um den pH-Wert einzuhalten. Als Basen können z.B. die gleichen Amine Verwendung finden, wie sie zur Zubereitung der wässrigen Phase bereits erwähnt wurden, bevorzugt Natriumhydroxid, Kaliumhydroxid, Lithiumhydroxid, Natriumcarbonat, Kaliumcarbonat, Lithiumcarbonat, Natriumphosphat, Kaliumphosphat und Lithiumphosphat. Als Säuren kommen z.B. Salzsäure, Essigsäure, Ameisensäure, Schwefelsäure oder Phosphorsäure in Betracht. Bevorzugt ist Salzsäure.

In einer weiteren bevorzugten Methode der Aufkonzentrierung wird der Suspension ein polymeres Bindemittel zugesetzt, beispielsweise Alginat, und anschließend wird eine Abtrennung durch Zentrifugieren oder Absetzen im Schwerefeld und anschließende Redispergierung als Konzentrat vorgenommen.

Eine weitere bevorzugte Methode der Aufkonzentrierung umfasst eine Extraktion durch Zugabe eines Extraktionsmittels zur Suspension nach der Fällung. Dieses Extraktionsmittel, sollte bevorzugt die Bedingungen erfüllen (i) nicht mischbar mit Wasser, (ii) löslich in dem Lösungsmittel und (iii) kein Lösungsmittel für den Kautschuk zu sein, (iv) hinreichende Dichtedifferenz zu Wasser zu besitzen sowie besonders bevorzugt die weiteren Bedingungen (v) einen höheren Dampfdruck als das Lösungsmittel zu haben und (vi) möglichst kein Azeotrop mit dem Lösungsmittel zu bilden. Bevorzugte Extraktionsmittel sind lineare, cyclische oder verzweigte Alkane mit mindestens 6 C-Atomen und bevorzugt mit mindestens 10 C-Atomen. Besonders bevorzugt ist Hexadecan. Die Kontaktierung zwischen den gefällten Polymerpartikeln und dem Extraktionsmitel erfolgt bevorzugt in einem dem Fachmann bekannten Mischorgan, z.B. in einem Rührbehälter. Hierdurch geht ein großer Teil des Lösungsmittels in die Phase des Extraxtionsmittels über, und die Suspension des carboxylgruppenhaltigen Nitrilkautschuks verbleibt in der Restwasserphase. Die Phasentrennung erfolgt anschließend in bekannten Apparaten wie z.B. Absetzbehältern, die mit Einsätzen zum besseren Absetzen der Tropfen ausgerüstet sein können, oder Zentrifugen.

Die Aufkonzentration der erfindungsgemäßen Suspension wird bis zur gewünschten Feststoffkonzentration durchgeführt. Die Feststoffkonzentration der erfindungsgemäßen Suspension beträgt üblicherweise 10 bis 65 Gew.-%, bevorzugt 20 bis 60 Gew.-%, besonders bevorzugt 25 bis 55 Gew.-% und insbesondere 25 bis 51 Gew.-%.

Nach der Aufkonzentrierung durch Eindampfen und/oder Extraktion erhält man neben der erfindungsgemäßen Suspension das abgetrennte Lösungsmittel aus dem Fällverfahren, ggf. weiteres Lösungsmittel aus einem evt. angewendeten Extraktionsverfahren, das abgetrennte Wasser sowie ggf. flüchtige Basen. Um die Wirtschaftlichkeit des erfindungsgemäßen Verfahrens zu erhöhen, hat es sich bewährt, diese Stoffe voneinander zu trennen und zu recyclieren. Bevorzugt erfolgt die Auftrennung in einer oder mehreren Destillationskolonnen, die im Batch oder kontinuierlich betrieben werden können. Solche Destillationskolonnen sind dem Fachmann bekannt und können nach dem Stand der Technik ausgelegt werden. Das Lösungsmittel aus der Fällung in Schritt 2) sowie das ggf. zur Extraktion eingesetzte Lösungsmittel werden dem Verfahren erneut als Lösungsmittel für den Kautschuk bzw. als Extraktionmittel zugeführt. Bildet das organische Lösungsmittel mit Wasser ein Azeotrop bzw. bildet sich ggf. im ternären Gemisch von Wasser, Lösungsmittel und Extraktionsmittel ein Azeotrop, so sind die dem Fachmann bekannten Methoden zur Trennung von Azeotropen wie z.B. die Destillation auf zwei verschiedenen Druckstufen anzuwenden.

Werden, wie bevorzugt, Amine als basische Substanzen eingesetzt, so ist es ggf. sinnvoll, noch eine weitere Trennstufe zur Trennung der Amine von dem Lösemittel durchzuführen. Dies kann ebenfalls in einer Destillationskolonne erfolgen. Diese Destillationskolonne kann mit der weiteren Destillationskolonne zum Auftrennen von Wasser und Lösemittel in einer einzigen vereint sein, z.B. in Trennwandkolonne. Eine andere Möglichkeit ist es, das Amin durch Säurefunktionalität aus dem Brüdenstrom oder aus dem Lösemittel zu entfernen. Dies kann z.B. durch eine Wäsche mit saurer Flüssigkeit (beispielsweise Schwefelsäure) oder durch einen Ionentauscher geschehen, oder durch Ausfällen mit einer sauren Verbindung.

Werden Basen mit einem geringeren Siedepunkt als Wasser eingesetzt, die nicht vollständig dissoziiert vorliegen, dann besteht die Möglichkeit, diese Basen mit stärkeren Basen, z.B. Natronlauge, bevorzugt während der Aufkonzentrierung, auszutreiben und dadurch einen Basentausch vorzunehmen.

### Carboxylgruppenhaltige ganz oder teilweise hydrierten Nitrilkautschuke:

Bei den in der wässrigen Suspension enthaltenen carboxylgruppenhaltigen, ganz oder teilweise hydrierten Nitrilkautschuken handelt es sich um solche mit Wiederholungseinheiten, die sich von mindestens einem konjugierten Dien, mindestens einem α,β-ungesättigten Nitril und mindestens einem weiteren carboxylgruppenhaltigen, copolymerisierbaren Termonomer ableiten, wobei die C=C Doppelbindungen des einpolymerisierten Dien-Monomers zu mindestens 50%, bevorzugt zu mindestens 80%, besonders bevorzugt zu 80-100% und insbesondere zu 90 -100% hydriert sind.

Das **konjugierte Dien** kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **α,β-ungesättigtes Nitril** kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Unter "carboxylgruppenhaltigen Termonomeren" werden solche Monomere verstanden, die entweder mindestens eine Carboxylgruppe im Monomermolekül aufweisen, oder die in situ unter Freisetzung mindestens einer Carboxylgruppe reagieren können.

Als carboxylgruppenhaltige, copolymerisierbare Termonomere kommen z.B. **α,β-unge-sättigte Monocarbonsäuren,** deren **Ester** oder **Amide, α,β-ungesättigte Dicarbonsäuren,** deren **Mono-** oder **Diester** oder die **entsprechenden Anhydride** oder **Amide** in Betracht.

Ferner bevorzugt sind wässrige Suspensionen eines carboxylgruppenhaltigen, ganz oder teilweise hydrierten Nitrilkautschuk, der Wiederholungseinheiten enthält mindestens eines (C₄-C₆) konjugierten Diens, bevorzugt 1,3-Butadien, Isopren, 2,3-Dimethylbutadien, Piperylen oder Gemischen daraus, mindestens eines (C₃-C₅)-α,β-ungesättigten Nitrils, bevorzugt Acrylnitril, Methacrylnitril, Ethacrylnitril oder Mischungen davon und mindestens eines weiteren carboxylgruppenhaltigen, copolymerisierbaren Monomers ausgewählt aus der Gruppe bestehend aus α,β-ungesättigte Monocarbonsäuren, deren Estern, deren Amiden, α,β-ungesättigte Dicarbonsäuren, deren Mono- oder Diestern oder deren entsprechenden Anhydride oder Amide.

Als α,β-ungesättigte Monocarbonsäuren können bevorzugt Acrylsäure und Methacrylsäure eingesetzt werden. Einsetzbar sind auch Ester der α,β-ungesättigten Monocarbonsäuren, bevorzugt deren Alkylester und Alkoxyalkylester. Bevorzugt sind die Alkylester, insbesondere C₁-C₁₈ Alkylester der α,β-ungesättigten Monocarbonsäuren. Besonders bevorzugt sind Alkylester, insbesondere C₁-C₁₈ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylate, Butyl-methacrylat und 2-Ethylhexylmethacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere C₂-C₁₂-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxyethyl(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylate and Cyanoalkylmethacrylate, mit 2-12 C-Atomen in der Cyanoalkylgruppe, vorzugsweise α-Cyanoethylacrylat, β-Cyanoethylacrylat und Cyanobutylmethacrylat. Einsetzbar sind auch Hydroxyalkylacrylate and Hydroxyalkylmethacrylat, in denen die C-Atom-Zahl der Hydroxyalkylgruppen 1-12 beträgt, vorzugsweise 2-Hydroxyethylacrylat, 2-Hydroxyethyl methacrylat und 3-Hydroxypropylacrylat. Einsetzbar sind auch Fluor-substituierte benzylgruppenhaltige Acrylate oder Methacrylate, vorzugsweise Fluorobenzylacrylat, und Fluorobenzylmethacrylat. Einsetzbar sind auch Fluoroalkylgruppen-haltige Acrylate und -Methacrylate, vorzugsweise Trifluoroethylacrylat und Tetrafluoropropylmethacrylat. Einsetzbar sind auch Aminogruppenhaltige 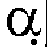 β-ungesättigte Carbonsäureester wie Dimethylaminomethyl-acrylat und Diethylaminoethylacrylat.

Als copolymerisierbare Monomere können auch α,β-ungesättigte Dicarbonsäuren, bevorzugt Maleinsäure, Fumarsäure, Itaconsäure, Citraconsäure und Mesaconsäure, oder α,β-ungesättigte Dicarbonsäureanhydride, bevorzugt Maleinsäureanhydrid, Fumarsäureanhydrid, Itaconsäureanhydrid, Citraconsäureanhydrid und Mesaconsäureanhydrid eingesetzt werden.

Eingesetzt werden können ferner Mono- oder Diester von α,β-ungesättigten Dicarbonsäuren, z.B. in Form der Alkyl-, bevorzugt C₁-C₁₀-Alkyl, insbesondere Ethyl-, n-Propyl-, iso-Propyl, n-Butyl-, tert.-Butyl, n-Pentyl- oder n-Hexyl-, Cycloalkyl-, bevorzugt C₅-C₁₂-Cycloalkyl-, besonders bevorzugt C₆-C₁₂-Cycloalkyl, Alkylcycloalkyl-, bevorzugt C₆-C₁₂-Alkylcycloalkyl-, besonders bevorzugt C₇-C₁₀-Alkylcycloalkyl, Aryl-, bevorzugt C₆-C₁₄-Aryl-, -Mono- oder -Diester, wobei es sich im Fall der Diester jeweils auch um gemischte Ester handeln kann.

### Beispiele von α,β-ungesättigten Dicarbonsäuremonoestern umfassen

- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzugt Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat;
- Mesaconsäuremonoalkylester, bevorzugt Mesaconsäuremonoethylester.

Als α,β-ungesättigte Dicarbonsäurediester können die analogen Diester basierend auf den zuvor genannten Monoestergruppen eingesetzt werden, wobei es sich bei den Estergruppen auch um chemisch verschiedene handeln kann.

Die Anteile an konjugiertem Dien und α,β-ungesättigtem Nitril in den einzusetzenden carboxylgruppenhaltigen, ganz oder teilweise hydrierten Nitrilkautschuken können in weiten Bereichen schwanken. Der Anteil des oder der Summe der konjugierten Diene liegt üblicherweise im Bereich von 40 bis 90 Gew.-%, bevorzugt im Bereich von 60 bis 85 Gew. %, bezogen auf das Gesamtpolymer, der Anteil des oder der Summe der α,β-ungesättigten Nitrile liegt üblicherweise bei 9,9 bis 59,9 Gew.-%, bevorzugt bei 14 bis 40 Gew.-%, bezogen auf das Gesamtpolymer und der Anteil des carboxylgruppenhaltigen Monomers liegt im Bereich von 0,1 bis 30 Gew.-%, besonders bevorzugt 1 bis 20 Gew.-%, bezogen auf das Gesamtpolymer, wobei sich die Anteile aller drei Monomere jeweils zu 100 Gew.% aufsummieren müssen.

Die carboxylgruppenhaltigen, ganz oder teilweise hydrierten Nitrilkautschuke weisen Mooney-Viskositäten (ML (1+4 @100°C)) von 1 bis 160, vorzugsweise von 15 bis 150 Mooney-Einheiten, besonders bevorzugt von 20 bis 150 Mooney-Einheiten und insbesondere 25 bis 145 Mooney-Einheiten auf. Die Mooney-Viskosität (ML (1+4 bei 100°C)) wird mittels eines Scherscheibenviskosimeters nach DIN 53523/3 bzw. ASTM D1646 bei 100°C bestimmt.

Die eingesetzten carboxylgruppenhaltigen, ganz oder teilweise hydrierten Nitrilkautschuke besitzen typischerweise eine Polydispersität PDI = Mw/Mn, wobei Mw das Gewichtsmittel und Mn das Zahlenmittel des Molekulargewichts darstellt, im Bereich von 2,0 bis 6,0 und bevorzugt im Bereich von 2,0 bis 5,0.

Sie lassen sich über dem Fachmann bekannte Methoden synthetisieren, d.h. üblicherweise über eine Emulsionspolymerisation der entsprechenden zuvor genannten Monomere zum carboxylgruppenhaltigen Nitrilkautschuk und eine anschließende homogen oder auch heterogen katalysierte Hydrierung in organischer Lösung z.B. in Chlorbenzol oder Aceton.

Carboxylgruppenhaltige, ganz oder teilweise hydrierte Nitrilkautschuke sind auch käuflich erhältlich, z.B. unter dem Handelsnamen Therban^{®} XT VP KA 8889 von der Lanxess Deutschland GmbH.

Unter dem Begriff "Emulgator", der in der erfindungsgemäßen Suspension mit maximal 1 Gew.-Teil, bezogen auf 100 Gew.-Teile des carboxylierten, ganz oder teilweise hydrierten Nitrilkautschuks, anwesend ist, werden in der vorliegenden Anmeldung anionische, kationische oder nichtionische Emulgatoren verstanden, die üblicherweise zur Stabilisierung von Öl- in Wasser-Emulsionen führen. Diese Wirkung basiert auf einer Erniedrigung der Grenzflächenspannung zwischen organischer Polymerphase und wässriger Phase durch die Emulgatoren. Unter die Definition der Emulgatoren fallen insbesondere solche, mit deren Hilfe die Grenzflächenspannung zwischen organischer und wässriger Phase den Wert von 10 mN/m, bevorzugt den Wert von 1 mN/m unterschreitet.

Unter die Definition fallen z.B. aliphatische und/oder aromatische Kohlenwasserstoffe mit 8 bis 30 C-Atomen, die eine hydrophile Endgruppe besitzen, bevorzugt eine Sulfonat-, Sulfat-, Carboxylat-, Phosphat- oder Ammonium-Endgruppe. Weiterhin fallen unter die Definition nichtionische Tenside mit funktionellen Gruppen, wie Polyalkohole, Polyether und/oder Polyester. Weiterhin fallen unter die Definition Fettsäuresalze, wie die Natrium- und/oder Kaliumsalze der Ölsäure, die entsprechenden Salze von Alkylarylsulfonsäuren, der Naphthylsulfonsäure und deren Kondensationsprodukte z.B. mit Formaldehyd, sowie die entsprechenden Salze der Alkylbernsteinsäure und der Alkylsulfobernsteinsäure.

**Gegenstand der Erfindung** ist ferner ein **Verfahren zur Beschichtung von Trägermaterialien,** bevorzugt von Kunststoffen, Metallen oder Fasern, besonders bevorzugt Glasfasern, Metallfasern oder synthetischen organischen Fasern, insbesondere Fasern aus Polyestern, aliphatischen und/oder aromatischen Polyamiden oder Polyvinylalkohol, indem man die wässrige erfindungsgemäße Suspension mit dem Trägermaterial in Kontakt bringt.

Die vorgenannten Fasern können jeweils in Form von Stapelfasern, Filamenten, Korden oder Seilen eingesetzt werden.

### Gegenstand der Erfindung ist somit ferner eine Bindemittelzusammensetzung enthaltend

a) eine erfindungsgemäße wässrige Suspension sowie
b) eine Mischung enthaltend Harz und/oder Härter, bevorzugt Resorcinol/ Formaldehyd, Resorcinol/Chlorophenol/Formaldehyd, Isocyanate, geblockte Isocyanate, Harnstoffderivate oder Mischungen davon und
c) optional ein oder mehrere weitere Kautschukadditive, bevorzugt Vernetzungsmittel, Vernetzungsbeschleuniger und Füllstoffe, insbesondere Russ oder mineralischen Füllstoff.

Besonders bevorzugt wird zur Beschichtung der vorgenannten Trägermaterialien eine Bindemittelzusammensetzung verwendet, die a) die erfindungsgemäße Suspension sowie b) eine Resorcinol-Formaldehyd Mischung enthält.

Das Gewichtsverhältnis von Resorcinol zu Formaldehyd in der Mischung b) ist bevorzugt 1: (0,5-3), bevorzugt 1:(1-2). Als Mischung b) sind auch Resorcinol-Chlorophenol-Formaldehyd Mischungen (z.B. 2,6-Bis(2,4-dihydroxyphenylmethyl)-4-chlorophenol-Formaldehyd-Mischungen) bewährt.

Die Resorcinol-Formaldehyd Mischung b) kann einen Gehalt von 10 bis 180 Gew.-Teilen (trocken), bezogen auf 100 Gew.-Teile des im Latex enthaltenen carboxylierten, ganz oder teilweise hydrierten Nitrilkautschuk, aufweisen.

Beim Einsatz von Glasfasern sollte das Gewichtsverhältnis einer Resorcinol-Formaldehyd Mischung b) zum HXNBR Latex (trocken) bei 1:(5-15), bevorzugt 1:(8-13), bei organischen synthetischen Fasern bei 1: (3-10), bevorzugt 1: (5-8) liegen.

Die Bindemittelzusammensetzung kann neben der erfindungsgemäßen Suspension a) und der Mischung b) auch noch ein oder mehrere weitere Latices d) aufweisen, sofern dadurch die grundsätzlichen Eigenschaften bei der Trägermaterialbeschichtung nicht nachteilig verändert werden. Geeignet sind z.B. Latices auf Basis von Styrol-Butadien Copolymeren und deren Modifikationen, Acrylnitril-Butadien Co- oder Terpolymeren und deren Modifikationen, Naturkautschuk Latex und dessen Modifikationen, Vinylpyrrolidon(VP)-Latex und dessen Modifikationen, Chlorsulfonkautschuk (CSM)-Latex und dessen Modifikationen, Chloropren(CR)-Latex und dessen Modifikationen.

Die Menge der zur Beschichtung des Trägermaterials, insbesondere von Fasern verwendeten Bindemittelzusammensetzung liegt üblicherweise im Bereich von 10 bis 25 Gew.-%, bevorzugt im Bereich von 15 bis 20 Gew.-% für Glasfasern, sowie bevorzugt 3 bis 10 Gew.-% und besonders bevorzugt 5 bis 8 Gew.-% für organische synthetische Fasern.

Nach Auftragen der Bindemittelzusammensetzung auf eine Faser oder Gewebe werden die benetzten Fasern/Gewebe typischerweise bei 120 bis 350°C, bevorzugt bei 200 bis 300°C im Fall von Glasfasern sowie bei 140 bis 250°C im Fall von organisch synthetischen Fasern getrocknet.

Diese Bindemittelzusammensetzungen auf Basis der erfindungsgemäßen Suspensionen zeichnen sich in der Anwendung dadurch aus, dass sie ausgezeichnete Haftvermittler für die weiteren Kautschuke sind, in die die beschichteten Trägermaterialien eingebettet werden. Für einige Fasern ist eine weitere Verbesserung der Bindeeigenschaften möglich, indem man die Fasern vor Auftrag der Bindemittelzusammensetzungen mit Lösungen aus Isocyanaten oder Epoxiden oder Mischungen davon zu benetzen. Die Fasern werden dann getrocknet, bevor sie mit der Bindemittelzusammensetzung wie beschrieben benetzt werden. Dann ist die Trocknungstemperatur geringfügig niedriger als im oben beschriebenen Fall.

**Gegenstand der Erfindung** ist ferner das **beschichtete Trägermaterial** welches über das vorgenannte Beschichtungsverfahren erhältlich ist.

**Gegenstand der Erfindung** ist weiterhin ein **Verfahren zur Herstellung von Verbundwerkstoffen,** welches dadurch gekennzeichnet ist, dass das beschichtete Trägermaterial in einen oder mehrere weitere Kautschuken sowie Hilfsmittel eingebettet und vulkanisiert wird, wobei die Kautschuke bevorzugt ausgewählt sind aus der Gruppe bestehend aus NR, BR, SBR, EPM, EPDM, ECO, EVM, CSM, ACM, VMQ, FKM, NBR, HNBR und beliebige Mischungen daraus und es sich bei den Hilfsmittel bevorzugt um Füllstoffe, Vernetzer und Vernetzungsbeschleuniger handelt.

Als Füllstoffe, Vernetzer und Vernetzungsbeschleuniger kommen alle dem Fachmann bekannten in Frage, als Vernetzer z.B. peroxidisch vernetzende Systeme oder solche auf Schwefel- und/oder Thiuram-Basis. Als Additive sind insbesondere solche geeignet, die eine Bindung der Kautschuke an das oben beschriebene, mit der erfindungsgemäßen Suspension ausgerüstete Trägermaterial, insbesondere in Form von Fasern, noch weiter verbessern.

Geeignete Vulkanisationsbedingungen für die Herstellung der Verbundwerkstoffe sind dem Fachmann hinlänglich bekannt.

Die Verbundwerkstoffe haben verschiedenste Einsatzfelder, bevorzugt als verstärkte Artikel aller Art, besonders bevorzugt als faserverstärkte Artikel aller Art, insbesondere als Riemen aller Art, Membranen, Bälge, Luftfedern, Gummimuskeln und Schläuche.

### Beispiele:

In den nachfolgenden Beispielen wurde eingesetzt:

| **Carboxylgruppenhaltiger Hydrierter Nitrilkautschuk** | **Acrylnitril-Gehalt** | **ButadienGehalt** | **RDB*** | **Mooney-Viskosität (ML 1+4 bei 100°C)** |
|---|---|---|---|---|
| | **(Gew.%)** | **(Gew.%)** | **(%)** | |
| Therban^{®}XT VP KA 8889 (Hydriertes Acrylnitril/Butadien/ Methacrylsäure-Terpolymer) (nachfolgend auch "HXNBR-1") | 33 | 62 | 3,5 | 77 |
| HXNBR-2 (Hydriertes Acrylnitril/Butadien/ Maleinsäuremonoethylester-Terpolymer) | 34 | 61 | <0,9 | 83 |
| HXNBR-3 (Hydriertes Acrylnitril/Butadien/ Maleinsäuremonoethylester-Terpolymer) | 43 | 52 | <0,9 | 106 |
| Therban^{®} A 3407 (Hydriertes Acrylnitril/Butadien Copolymer) | 34 | 66 | <0,9 | 70 |

| | | | | |
|---|---|---|---|---|
| * RDB: Restdoppelbindungsgehalt | | | | |

| | |
|---|---|
| **Corax^{®} N550** | Ruß N550, Evonik - Degussa GmbH |
| **Luvomaxx^{®} CDPA** | 4,4-Bisl,1-dimethylbenzyl)-diphenylamin, Lehmann&Voss & Co. |
| **Maglite^{®} DE** | Magnesium Oxid, Lehmann & Voss & Co. |
| **Penacolite R50** | Resorcinolformaldehydlösung, 50% in Wasser, Castle Chemicals Ltd |
| **Perkadox^{®} 14-40** | Di(tert-butylperoxyisopropyl)benzol geträgert auf Kieselsäure, 40% aktiv, Akzo Nobel Chemicals GmbH |
| **TAIC** | Triallylisocyanurat, Kettlitz Chemie GmbH & Co. |
| **Therban^{®} ART VP KA 8796:** | Masterbatch aus Therban^{®} 3467 (HNBR mit 34 Gew.-% Acrylnitril und 66 Gew.-% Butadien) und Zinkdiacrylat, LANXESS Deutschland GmbH |
| **Vulkasil A1** | Silika, LANXESS Deutschland GmbH |
| **Vulkanox^{®} ZMB2** | Methyl-2-mercaptobenzimidazol Zink Salz, LANXESS Deutschland GmbH |
| **Zinkoxid Aktiv** | Zinkoxid, LANXESS Deutschland GmbH |

### Beispiele 1-8: Fällung von HXNBR-1 aus acetonischer Lösung

Die Latices wurden wie folgt hergestellt. Die speziell gewählten Verfahrensparameter sind dabei in Tabelle 1 angegeben. Die Versuche wurden bei Raumtemperatur und Normaldruck durchgeführt. Unter Raumtemperatur werden 22 +/- 2 °C verstanden.

In einer Rollrandflasche mit 50 mL Volumen wurden 10 g einer acetonischen Lösung vorgelegt, die den in Tabelle 1 angegebenen Gehalt an vollständig gelöstem HXNBR-1 aufwies. Unter Rühren mit einem Magnetrührer bei maximaler Geschwindigkeit erfolgte die Zugabe von Wasser, welches mit der in Tabelle 1 angegebenen Base auf den dort ebenfalls genannten pH-Wert eingestellt war, mittels einer Spritze so schnell wie möglich. Anschließend wurde die erhaltene Suspension mittels eines Rotationsverdampfers vom Lösungsmittel Aceton befreit und geringe Mengen grober Teilchen durch Dekantieren abgetrennt. An der verbleibenden HXNBR-1 Suspension wurde zum einen die mittlere Teilchengröße der HXNBR-1 Partikel durch dynamische Lichtstreuung mit einem ZetaSizer 3000 HS der Firma Malvern gemessen und zum anderen der Feststoffgehalt mittels einer Trocknungswaage Moisture Analyzer LJ 16 der Firma Mettler. Die in Tabelle 1 angegebene Ausbeute ist der Anteil an HXNBR-1, der auf der Trocknungswaage gefunden wurde. Werte von knapp über 100% sind in durch Wägetoleranzen der Methode begründet.. "n.b." heisst, dass die Ausbeute nicht bestimmt wurde.

**Tabelle 1:**

| **Beispiel** | **Konzentration HNXBR-1 bezogen auf das Gesamtgewicht der Lösung** | **Masse Wasserphase** | **Base** | **pH Wasserphase** | **Ausbeute** | **Mittlerer Teilchendurchmesser Bestimmt durch dyn. Lichtstr.** |
|---|---|---|---|---|---|---|
| | **[Gew.%]** | **[g]** | | | **[%]** | **[nm]** |
| 1 | 2 | 10 | Natronlauge | 12 | 99,9 | 205 |
| 2 | 1 | 10 | - | 7 | n.b. | 161 |
| 3 | 2 | 1 | Ammoniak | 12 | n.b. | 94 |
| 4 | 2 | 1 | Methylamin | 12 | 100,6 | 132 |
| 5 | 2 | 1 | Dimethylamin | 12 | 97,9 | 158 |
| 6 | 2 | 1 | Ethylamin | 12 | 99,4 | 152 |
| 7 | 2 | 1 | Diethylamin | 12 | 100,6 | 163 |
| 8 | 3 | 10 | Methylamin | 13 | 92,7 | 109 |

### Beispiel 9: Fällung von HXNBR-1 aus acetonischer Lösung

6400 g einer acetonischen Lösung mit 2,5 Gew.-% HXNBR-1 wurden in einen mit einem dreistufigen Rührer ausgestatteten Rührbehälter mit 10 L Volumen gegeben. 640 g Wasser, das zuvor mit Diethylamin auf einen pH-Wert von 12.3 eingestellt worden war, wurden unter Rühren über sechs Sekunden der HXNBR-1-Lösung zugegeben. Danach wurde der Druck im Behälter auf 250 mbar abgesenkt und bei Drücken zwischen 200 und 300 mbar Wasser und Aceton abdestilliert. Dazu wurde die Wandtemperautur bis auf 35°C, bei Erreichen von 4,7 Liter Behälterinhalt nach 3 Stunden 6 Minuten Versuchszeit auf 45°C und bei Erreichen von 1,6 Liter Behälterinhalt nach 5 Stunden 33 Minuten Versuchszeit auf 50°C erhöht. Bei einem Behälterinhalt von 0,9 Liter wurde der Druck nach sechs Stunden 39 Minuten Versuchszeit auf 100 mbar abgesenkt. Nach sieben Stunden und einer Minute Versuchszeit wurden 545,8 g Latex aus dem Rührbehälter abgelassen. Einige wenige grobkörnige Teilchen hatten sich auf dem Boden des Rührbehälters abgesetzt und wurden verworfen. Aufgrund der vernachlässigbaren Menge dieser grobkörnigen Partikel wurde letztere nicht bestimmt. Der mittlere Partikeldurchmesser, gemessen mittels dynamischer Lichtstreuung mit dem Messgerät Zeta Plus der Brookhaven Instruments Corporation, betrug 229 Nanometer. Der pH-Wert des Latex betrug 9.8.

Der so erhaltene Latex wurde in einen Rührbehälter mit einem Liter Volumen gegeben und bei 100 mbar Druck und 50 °C Wandtemperatur weiter destilliert. Der pH-Wert wurde alle zwei Stunden kontrolliert und durch Zugabe von insgesamt 141mL 0,1-molarer NaOH im Bereich von über 9 gehalten. Durch die Zugabe der Natronlauge wurde ein Basentausch erreicht. Es wurde eine Zwischenprobe mit einem pH-Wert von 9,2 und einer Feststoffkonzentration von 44,5% entnommen.

Erhalten wurde ein HXNBR-1 Latex mit 50,7 % Feststoffanteil und einem pH-Wert von 9.35 und einem Partikeldurchmesser von 241 nm, gemessen mit dynamischer Lichtstreuung, der durch Natronlauge stabilisiert war.

### Beispiel 10: Fällung von HXNBR-1 aus acetonischer Lösung

In einem inertisierten Rührbehälter A wurde bei Raumtemperatur eine Lösung von 14,8 kg HXNBR-1 in 150 kg Aceton hergestellt. 48 kg dieser Lösung und weitere 112 kg Aceton wurden in einen weiteren inertisierten Rührbehälter B, der mit einem mehrstufigen Rührer ausgerüstet war, gegeben und auf 25°C vorgeheizt.

In einem weiteren Behälter C wurden 16 kg vollentsalztes Wasser mit 150 g Diethylamin gemischt. Unter Rühren wurde diese Mischung aus Wasser und Diethylamin innerhalb von 22 Sekunden zu der acetonischen Lösung des HXNBR-1 in Rührbehälter B zugegeben und unter Ausfällung des HXNBR-1 noch 5 Minuten nachgerührt.

Die Wandtemperatur des Kessels B wurde danach von 25°C auf 35°C und nach einer Stunde auf 45°C erhöht. Gleichzeitig wurde der Druck auf Werte zwischen 300 und 400 mbar gesenkt und Wasser und Aceton unter Rühren abdestilliert. Nach 4 Stunden wurde die verbleibende HXNBR-1 Suspension in Wasser in einen Zwischenbehälter abgelassen.

Diese Prozedur des Einfüllens einer HXNBR-1 Lösung, der Fällung und der Eindampfung wurde noch zweimal wiederholt, wobei die erhaltene HXNBR-1 Suspension beim letzten Mal im Kessel verblieb. Zusätzlich wurden die HXNBR-1 Suspensionen der ersten beiden Ansätze in den Kessel gefüllt und die Destillation wieder aufgenommen. Der Druck wurde schrittweise bis 90 mbar abgesenkt und die Wandtemperatur des Kessels auf 70°C erhöht.

Erhalten wurde danach eine HXNBR-1-Suspension mit einem Feststoffgehalt von 25,5% und einem pH-Wert von 10.0.

Die Suspension wurde daraufhin in sechs Teile zwischen 5 kg und 7 kg aufgeteilt, die nacheinander in einem 10-Liter-Rührbehälter unter Rühren bei Drücken zwischen 75 mbar und 250 mbar und Wandtemperaturen von 50°C bis 55°C bis zu einem Feststoffgehalt von 40% eingedampft wurden. Der pH-Wert jedes Ansatzes wurde kontrolliert und durch Zugabe von Diethylamin im Bereich zwischen 9 und 9,5 gehalten.

### Beispiel 11: Fällung von HXNBR-1 aus acetonischer Lösung

6400 g einer acetonischen Lösung mit 3 Gew.-% HXNBR-1 wurden in einen mit einem dreistufigen Rührer ausgestatteten Rührbehälter mit 10 L Volumen gegeben. Anschließend wurden 640 g Wasser mit 0,2 mol/L Dipropylamin bei 20°C unter Rühren über sechs Sekunden der acetonischen Lösung zugegeben. Bei 20°C wurde nachfolgend durch Absenkung des Druckes Aceton und Wasser abdestilliert. Die erhaltene Suspension besaß einen mittels dynamischer Lichtstreuung (intensitätsgewichtet) gemessene Teilchendurchmesser von 310 nm und einen Feststoffgehalt von 27,1%.

### Beispiele 12-26: Fällung von HXNBR-1 aus THF Lösung

In einer Rollrandflasche mit 50 mL Volumen wurden 10 g einer THF-Lösung vorgelegt, die den in Tabelle 2 angegebenen Gehalt an vollständig gelöstem HXNBR-1 aufwies. Unter Rühren mit einem Magnetrührer bei maximaler Geschwindigkeit erfolgte die Zugabe von Wasser im Massenverhältnis von 1:5 (1 Gewichtsteil Wasser auf 5 Gewichtsteile organische Phase) mit der in Tabelle 2 angegebenen Konzentration an Diethylamin mittels einer Spritze mit einer Dosierzeit von einer Sekunde. Anschließend wurde der mittlere Teilchen-durchmesser mittels dynamischer Lichtstreuung mit einem ZetaSizer 3000 HS der Firma Malvern bestimmt. In allen Fällen wurde nach der Fällung kein Rückstand beobachtet (Ausbeute 100%). Für einige Versuche wurde das Lösungsmittel wie bei Beispiel 1-8 beschrieben entfernt, für diese Versuche ist der mittlere Teilchendurchmesser ebenfalls angegeben. Die Versuche wurden bei Raumtemperatur und Normaldruck durchgeführt.

Die Suspension aus Beispiel 18 wurde nach Entfernung des Lösungsmittels nochmals mit dynamischer Lichtstreuung auf den mittleren Teilchendurchmesser des HXNBR-1 untersucht. Er betrug 263 nm.

**Tabelle 2: Versuchsbedingungen sowie Ergebnisse; Beispiele 12-26**

| **Beispiel** | **Konzentration HXNBR -1 bezogen auf das Gesamtgewicht der Lösung** | **Konzentration Diethylamin in Wasser** | **mittlerer Teilchendurchmesser nach Fällung (bestimmt durch dynamische Lichtstreuung)** |
|---|---|---|---|
| | **[Gew.%]** | **[g/mol]** | **[nm]** |
| 12 | 1 | 0,117 | 216 |
| 13 | 2 | 0,117 | 237 |
| 14 | 3 | 0,117 | 322 |
| 15 | 4 | 0,117 | 345 |
| 16 | 5 | 0,117 | 310 |
| 17 | 6 | 0,117 | 301 |
| 18 | 7 | 0,117 | 309 |
| 19 | 8 | 0,117 | 336 |
| 20 | 9 | 0,117 | 349 |
| 21 | 10 | 0,117 | 496 |
| 21 | 10 | 0,234 | 349 |
| 22 | 11 | 0,234 | 312 |
| 23 | 12 | 0,234 | 370 |
| 24 | 13 | 0,234 | 340 |
| 25 | 14 | 0,234 | 310 |
| 26 | 15 | 0,234 | 331 |

### Beispiele 27-30: Kontinuierliche Fällung von HXNBR-1 aus einer THF-Lösung

Dem durch ein Rohr geleiteten Strom einer HXNBR-1-Lösung in THF wurde über eine seitlich unter einem Winkel von 90° angebrachte Düse mit 0,2 mm Durchmesser ein Strom basischen Wassers zugegeben, das mit 0,2 g/mol Diethylamin auf einen pH-Wert von 12,65 eingestellt worden war. Ummittelbar nach der Düse werden die beiden Ströme in einem Statikmischer vom Typ SMX mit einem Verhältnis von Länge zu Durchmesser von 14 und einem Durchmesser von 10 mm weiter vermischt. Die Teilchengrößenverteilung des aufgefangenen Produkts wurde mittels Laserbeugung (MS 2000 Hydro) untersucht. Die Werte für d₅₀ und d₉₀ sind in der Tabelle 3 angegeben. Eine Eindampfung wurde nicht vorgenommen. Bei allen Versuchen wurde kein Grobanteil festgestellt, d.h. die Ausbeute betrug 100%.

**Tabelle 3: Versuchsbedingungen sowie Ergebnisse; Beispiele 27-30**

| **Beispiel** | **Konzentration HXNBR-1 bezogen auf das Gesamtgewicht der Lösung [Gew.%]** | **Massenstrom Wasser (versetzt mit 0,2 mol/L Diethylamin)** | **Massenstrom HXNBR-1 Lösung in THF (kg/h)** | **d₅₀ (µm)** | **d₉₀ (µm)** |
|---|---|---|---|---|---|
| 27 | 7,5 | 0,585 | 2,96 | 2,52 | 3,56 |
| 28 | 10 | 0,59 | 3,02 | 0,564 | 0,893 |
| 29 | 12 | 0,34 | 1,72 | 0,4 | 0,632 |
| 30 | 12 | 0,42 | 1,7 | 0,178 | 0,356 |

### Beispiel 31: Fällung von HXNBR-1 aus THF Lösung

In einem Kessel mit 1 Liter Volumen wurden 600 g einer Lösung mit 10% HXNBR-1 in THF vorgelegt. 120 g Wasser, in denen 0,2 mol/L Diethylamin eingemischt wurde, wurde über eine Zeitraum von 1 Sekunde zugegeben. Anschließend wurde das THF bei 40°C und 150 mbar abgedampft. Es wurde eine HXNBR-1-Suspension mit einer Feststoffkonzentration von 37% und einem pH-Wert von 10,2 erhalten.

### Beispiel 32: Kontinuierliche Fällung von HXNBR-1 aus THF/Wasser-Lösung, Aufarbeitung über "fed batch"

Eine Polymerlösung, angesetzt aus 4920,5 g (76.2 Masse-%) THF, 1125 g (17,4 Masse-%) HXNBR-1 und 114,3 g (6,3 Masse-%) Wasser wurde über die gleiche Apparatur wie in Beispiel 27 bis 30 mit einem Wasserstrom, angesetzt aus 56,5 g (1,88 Masse-%) Diethylamin und 2943,5 g Wasser (98,12 Masse-%) gemischt. Der Massestrom der Polymerlösung betrug 5 Kilogramm pro Stunde, der Massestrom der Wasser-Amin-Mischung betrug 965 g pro Stunde.

792 g der so erhaltenen Suspension wurden in einen 1 1-Rührkessel vorgelegt, der eine Wandtemperatur von 25°C hatte. Danach wurde die Wandtemperatur auf 45°C angehoben und der Druck auf 220 mbar abs abgesenkt. 45 Minuten (0:45 h) nach Versuchsstart wurden weitere 250 mL der Suspension zugegeben, ebenso eine Stunde dreizehn Minuten nach Versuchsstart (1:13). Weitere Zugaben von jeweils 250 ml erfolgten 1:58 h, 2:30 h, 3:03 h, 3:46 h, 4:26 h, 5:08 h, 6:00 hund 7:12 h nach Versuchsstart, insgesamt also 2750 ml Suspension zusätzlich zugegeben. In der ganzen Zeit bis 08:30 h nach Versuchsstart wurde abdestilliert. Der pH-Wert am Ende dieser ersten Phase betrug 9,89. Anschließend wurde in einer weiteren Phase weitere 11 Stunden destilliert, unter Absenkung des Druckes auf Werte zwischen 130 und 200 mbar abs. 5:37 h nach dem Anfang der zweiten Phase, als ein pH-Wert von 9,5 erreicht wurde, wurden 12 g von 2,5-Masse%-Lösung von Diethylamin in Wasser zugegeben. 8:00 h nach Anfang der zweiten Phase wurden weitere 10 g einer 5 Masse-%-Diethylamin-Lösung in Wasser zugegeben. Im weiteren Verlauf wurden bei 08:09 h nach Beginn der zweiten Phase noch einmal 5 g einer 5 Masse-% Lösung Diethylamin in Wasser und bei 9:59 h nach Beginn der zweiten Phase noch einmal 10 g einer 5 Masse-%-Lösung Diethylamin in Wasser zugegeben.

Am Ende wurden 790 g Produkt mit 44,2 Masse-% HNXBR-1-Feststoff und einem d₅₀-Wert, gemessen durch Laserbeugung, von 200 Nanometer und einem d₉₀-Wert von 630 Nanometer erhalten.

### Beispiel 33: Kontinuierliche Fällung von HXNBR-1 mit reinem Wasser aus THF/ DEA-Lösung, mit "fed batch" - Aufarbeitung

Eine Lösung aus 4122,5 g THF (84,69 Masse-%), 727,5 g HXNBR-1 (14,94 Masse-%) und 10,45 g Diethylamin (0,37 Masse-%) wurde angesetzt. In der gleichen Anlage wie in den Beispielen 27 bis 30 wurde 5 kg/h der Polymerlösung mit 1,2 kg/h vollentsaltzem Wasser (ph 7) gemischt. Die sich ergebende Suspension hatte einen d₅₀-Wert von 134 Nanometer und einen d₉₀-Wert von 281 Nanometer, gemessen mit Laserbeugung.

571 g der so erhaltenen Suspension wurden in einem 1 L - Rührkessel vorgelegt und bei 45°C Wandtemperatur und Drücken zwischen 230 und 270 mbar abs abdestilliert. Innerhalb von zehn Stunden und vierzig Minuten wurden 2750 mL der Suspension hinzugegeben, danach fünf Stunden und 21 Minuten bei abnehmenden Drücken von 230 bis 105 mbar und gleicher Wandtemperatur weiter destilliert. Zwischendurch wurden 17 g von wässriger Diethylamin-Lösung einer Konzentration von 2,5 Masse-% hinzugegeben. Der d₅₀-Wert der entstehenden Suspension war 352 Nanometer, der d₉₀-Wert 732 Nanometer. Der pH-Wert am Ende betrug 9,9.

### Beispiel 34 und 35: Fällung von HXNBR-2 bzw. HXNBR-3 aus THF Lösung

In einem Kessel mit 1 Liter Volumen wurden 600 g einer Lösung mit je 10% der Polymere HXNBR 2 bzw. HXNBR 3 in THF vorgelegt. 120 g Wasser, in denen 0,2 mol/L Diethylamin eingemischt wurde, wurde über eine Zeitraum von 1 Sekunde zugegeben. Anschließend wurde das THF bei 40°C und 150 mbar abgedampft. Es wurden stabile Suspensionen erhalten. Die Werte sind in Tabelle 4 gezeigt. Der in Tabelle 4 angegebene pH Wert wurde nach der Entfernung des THF wie oben angegeben an der erhaltenen Suspension bestimmt. Die angegebene Viskosität wurde mittels Brookfield-Viskosimeter bestimmt. Der angegebene mittlere Teilchendurchmesser wurde mittels dynamischer Lichtstreuung wie in der Beschreibung angegeben bestimmt.

**Tabelle 4: Ergebnisse zu Beispielen 34 und 35**

| **Polymer** | **Lösungskonz. [Gew.-%]** | **Viskosität [cP]** | **pH-Wert** | **Mittlerer Teilchendurchmesser [nm]** |
|---|---|---|---|---|
| HXNBR 2 | 10 | 376,9 | 9,02 | 71,7 |
| HXNBR 3 | 10 | 67,5 | 9,02 | 78,2 |

### Stabilität der erfindungsgemäßen Suspension:

### A Bestimmung der Aufrahmung bei Zentrifugation

Die erfindungsgemäße Suspension aus **Beispiel 18** mit 30 Gew.-% Feststoffgehalt wurde 40 Stunden bei 1200g zentrifugiert. Während der Zentrifugation wurde über die Höhe der Probe die Transmission gemessen. Dabei zeigte sich ein Aufrahmen, d.h. an der Unterseite der Probe war ein klarer Spiegel zu beobachten, der sich mit einer Geschwindigkeit von 0,18 mm/Stunde nach oben bewegte. Daraus erhält man für die Lagerung des Latex eine minimale Aufklarungsgeschwindigkeit von 1,3 mm/Jahr bei einfacher Erdbeschleunigung, was zu vernachlässigen ist. Der Effekt des Aufrahmens war reversibel, die der Zentrifuge entnommenen Proben waren homogen. Insofern besitzt die erfindungsgemäße Suspension eine sehr hohe Langzeitstabilität.

### B Bestimmung der Separationsstabilität über Lichtrückstreuung sowie der Agglomerationsstabilität über Photonen-Korrelations-Spektroskopie

Die Zwischenprobe aus Beispiel 9 mit 44,6 Masse-% Feststoffanteil und einem pH-Wert von 9,2 wurde bei 40°C gelagert. Zwecks Bestimmung der Separationsstabilität wurde die Lichtrückstreuung der Probe ("Backscattering") einmal pro Woche mittels eines TURBISCAN ma 2000 der Firma Formulation SA, bestimmt. Die Messung erfolgte in einem Probegefäß mit 52 mm Probenhöhe. Die Probe zeigte innerhalb von 6 Wochen keinerlei Anzeichen von Instabilität. Innerhalb von 13 Wochen verringerte sich der Anteil rückgestreuten Lichts in einer Höhe von 45 mm nur von 0,744 auf 0,725, auch dieser Rückgang ist als extrem gering einzustufen. Mittels dynamischer Lichtstreuung wurde die Agglomerationsstabilität festgestellt, d.h. es wurde der mittlere Teilchendurchmesser vor und nach entsprechender Lagerung gemessen: Innerhalb von 13 Wochen veränderte sich der bestimmte mittlere Teilchendurchmesser von 234 nm auf 217 nm, d.h. er blieb im Rahmen der Meßgenauigkeit konstant.

### Beispiele 36 und 37: Festigkeitsprüfung von Resorcinol-Formaldehyd-Dips auf Basis der in Beispiel 10 hergestellten Suspension

Zur Herstellung des Resorcinol-Formaldehyd-Dips ("RFL-Dip") wurde die in Beispiel 10 erhaltene Suspension in einem Becherglas mit den in Tabelle 5 aufgelisteten Inhaltsstoffen in den angegebenen Mengen unter leichtem Rühren versetzt. Ein unbehandeltes Kordgewebe aus Polyamid 6.6 wurde in die erhaltene Lösung getaucht ("gedippt") und anschliessend bei 180°C für 30min getrocknet.

Anschliessend wurden 1cm breite Streifen von Rohmischungen auf Basis der Mischungen gemäß Tabelle 6 auf die Polyamidkorde vulkanisiert (Vulkanisations-Temperatur 180°C für 30min). Die Bindefestigkeit der Kautschukproben zum Polyamidkord wurde mit Hilfe einer gängigen Zugprüfmaschine der Marke Zwick getestet. Diese Ergebnisse, sowie die Ergebnisse nach Heissluftalterung über 3, 7 bzw. 14 Tage sind in Tabelle 6 gezeigt. Dabei zeigten alle Proben Kohäsionsbruch in der Kautschukphase. Die Festigkeit der Kautschukphase ist somit geringer als die Bindung zwischen Gummi und Polyamidkord. Die Bindung an den Polyamidkord beträgt somit 100%.

**Tabelle 5: Zusammensetzung eines Resorcinol-Formaldehyd Dips unter Nutzung der erfindungsgemässen Suspension aus Beispiel 10**

| **RFL-Dip** | |
|---|---|
| Entmineralisiertes Wasser | 508g |
| Ammoniumhydroxid (25%) | 10,3g |
| Penacolite R50 (50%) Resorcinol-Formaldehyd Harz | 55,6g |
| HXNBR-1 Suspension aus Beispiel 10 (40%) | 407,0g |
| Formaldehyd (37%) | 18,5g |
| **Total** | **1000,0g** |

**Tabelle 6: Rohmischungszusammensetzung und Bindefestigkeiten der vulkanisierten Rohmischungen zum mit der oben beschriebenen RFL-Lösung behandelten Polyamidcord**

| | | **Beispiel 36** | **Beispiel 37** |
|---|---|---|---|
| **Rohmischungszusammensetzung** | | | |
| Therban^{®} A 3407 | | 100 | 75 |
| Therban^{®} ART KA 8796 | | | 50 |
| Corax^{®} N550 | | 50 | 35 |
| Vulkasil^{®} A1 | | | 10 |
| ZnO | | 3 | |
| Maglite^{®} DE | | 3 | 2 |
| Luvomaxx^{®} CDPA | | 1,1 | 1,1 |
| Vulkanox^{®} ZMB2 | | 0,4 | 0,4 |
| TAIC | | 1,5 | |
| Perkadox^{®} 14/40 | | 7 | 8 |

| **Bindefestigkeit der vulkanisierten Rohmischungen auf Polyamidcord** | | | |
|---|---|---|---|
| Startpunkt | Trennkraft Mittelwert [N/mm] | 4,7 | 5,6 |
| 3d bei 150°C | Trennkraft Mittelwert [N/mm] | 5,8 | 5,7 |
| 7d bei 150°C | Trennkraft Mittelwert [N/mm] | 4,7 | 5,1 |
| 14d bei 150°C | Trennkraft Mittelwert [N/mm] | 4,7 | 3,6 |

## Patentansprüche

1. Wässrige Suspension eines carboxylgruppenhaltigen, ganz oder teilweise hydrierten Nitrilkautschuks mit einem Emulgatorgehalt von maximal 1 Gew.-Teil bezogen auf 100 Gew.-Teile des carboxylgruppenhaltigen, ganz oder teilweise hydrierten Nitrilkautschuks, wobei der carboxylgruppenhaltige, ganz oder teilweise hydrierte Nitrilkautschuk in der Suspension einen mittleren Teilchendurchmesser im Bereich von 0,01 bis 0,9 Mikrometern besitzt, gemessen mittels dynamischer Lichtstreuung.

2. Wässrige Suspension nach Anspruch 1, wobei der Teilchendurchmesser d₅₀ bestimmt durch Laserbeugung (intensitätsgewichtet) im Bereich von 0,01 Mikrometern bis 0,9 Mikrometern liegt.

3. Wässrige Suspension nach Anspruch 1 oder 2, worin der carboxylgruppenhaltige, ganz oder teilweise hydrierte Nitrilkautschuks mit einer Feststoffkonzentration von 5% bis 65 Gew.-% vorliegt.

4. Wässrige Suspension nach einem der Ansprüche 1 bis 3 enthaltend maximal 0,5 Gew.-Teile Emulgator, bezogen auf 100 Gew.-Teile des carboxylgruppenhaltigen, ganz oder teilweise hydrierten Nitril-kautschuks.

5. Wässrige Suspension nach einem der Ansprüche 1 bis 4 enthaltend einen carboxylgruppenhaltigen, ganz oder teilweise hydrierten Nitrilkautschuk, der Wiederholungseinheiten aufweist, die sich von mindestens einem konjugierten Dien, mindestens einem α,β-ungesättigten Nitril und mindestens einem weiteren carboxylgruppenhaltigen, copolymerisierbaren Monomer, das entweder mindestens eine Carboxylgruppe im Monomermolekül aufweist oder das in-situ unter Freisetzung mindestens einer Carboxylgruppe reagiert, ableiten, wobei die C=C Doppelbindungen des einpolymerisierten Dien-Monomers zu mindestens 50% hydriert sind.

6. Verfahren zur Herstellung einer wässrigen Suspension eines carboxylgruppenhaltigen, ganz oder teilweise hydrierten Nitrilkautschuks, **dadurch gekennzeichnet, dass**
1) ein carboxylgruppenhaltiger, ganz oder teilweise hydrierter Nitrilkautschuk zunächst in einem organischen Lösungsmittel unter Ausbildung einer organischen Phase gelöst wird,
2) anschließend die organische Phase mit einer wässrigen Phase, die einen pH-Wert von mindestens 6 besitzt, in Kontakt gebracht wird, wobei sich das Wasser im organischen Lösungsmittel ganz löst, der carboxylgruppenhaltige, ganz oder teilweise hydrierte Nitrilkautschuk ausfällt und sich somit eine Suspension bildet, und
3) das organische Lösungsmittel ganz oder teilweise entfernt wird,
wobei ein oder mehrere organische Lösungsmittel eingesetzt werden, die sich unter den gewählten Fällbedingungen vollständig mit Wasser in jedem Verhältnis mischen.

7. Verfahren nach Anspruch 6, wobei die eingesetzte wässrige Phase, mit der die organische Phase in Schritt 2) in Kontakt gebracht wird, einen pH-Wert von minimal 3 besitzt, unter der Maßgabe, dass in der organischen Phase aus Schritt 1) eine solche Menge an Base vorhanden ist, so dass sich beim Inkontaktbringen von organischer und wässriger Phase in Schritt 2) ein pH-Wert von mindestens 6 einstellt.

8. Verfahren nach einem der Ansprüche 6 oder 7, wobei als Lösungsmittel Aceton, Methylethylketon, Ameisensäure, Essigsäure, Tetrahydrofuran, Dioxan oder Mischungen aus zwei oder mehr dieser Lösungsmittel eingesetzt werden.

9. Verfahren nach einem der Ansprüche 6 bis 8, wobei die Konzentration des carboxylgruppenhaltigen, ganz oder teilweise hydrierten Nitrilkautschuks in der organischen Phase (d.h. Summe aus Lösungsmittel und Nitrilkautschuk) im Bereich von 0,1 Gew.% bis 30 Gew.% beträgt.

10. Verfahren nach einem der Ansprüche 6 bis 9, wobei das Lösen des carboxylgruppenhaltigen, ganz oder teilweise hydrierten Nitrilkautschuks bei einer Temperatur im Bereich von 0°C bis 200°C erfolgt.

11. Verfahren nach einem der Ansprüche 6 bis 10, wobei die Temperatur der organischen Phase vor Zugabe der wässrigen Phase in Schritt 2) größer als 0°C und kleiner als die Siedetemperatur des organischen Lösemittels ist bei dem Druck, bei dem die Fällung durchgeführt wird.

12. Verfahren nach einem der Ansprüche 6 bis 11, wobei der pH-Wert der wässrigen Phase durch Zugabe von einer oder mehreren basischen Substanzen eingestellt wird.

13. Verfahren nach einem der Ansprüche 6 bis 12, wobei das Massenverhältnis der den carboxylgruppenhaltigen ganz oder teilweise hydrierten Nitrilkautschuk enthaltenden organischen Phase zur wässrigen Phase bei 50:1 bis 1:1 liegt.

14. Verfahren zur Beschichtung von Trägermaterialien indem man die wässrige Suspension nach einem der Ansprüche 1 bis 5 mit dem Trägermaterial in Kontakt bringt.

15. Verfahren nach Anspruch 14, wobei die Suspension in Form einer Bindemittelzusammensetzung eingesetzt wird, die zusätzlich eine Mischung enthaltend Harz und/oder Härter, sowie optional ein oder mehrere weitere Kautschukadditive enthält.

16. Bindemittelzusammensetzung enthaltend
a) eine Suspension nach einem der Ansprüche 1 bis 4 sowie
b) eine Mischung enthaltend Harz und/oder Härter, und
c) optional ein oder mehrere weitere Kautschukadditive.

17. Beschichtetes Trägermaterial erhältlich nach dem Verfahren gemäß Anspruch 14 oder 15.

18. Verfahren zur Herstellung von Verbundwerkstoffen, **dadurch gekennzeichnet, dass** das beschichtete Trägermaterial nach Anspruch 17 in ein Gemisch aus einem oder mehreren weiteren Kautschuken und Hilfsmitteln eingebettet und vulkanisiert wird.

19. Verbundwerkstoffe erhältlich durch das Verfahren nach Anspruch 18.

## Claims

1. Aqueous suspension of a carboxylated, completely or partially hydrogenated nitrile rubber with emulsifier content of at most 1 part by weight, based on 100 parts by weight of the carboxylated, completely or partially hydrogenated nitrile rubber, where the average particle diameter of the carboxylated, completely or partially hydrogenated nitrile rubber in the suspension is in the range from 0.01 to 0.9 micrometre, measured by means of dynamic light scattering.

2. Aqueous suspension according to Claim 1, where the particle diameter d₅₀, determined via laser diffraction (intensity-weighted) is in the range from 0.01 micrometre to 0.9 micrometre.

3. Aqueous suspension according to Claim 1 or 2, in which the solids concentration present of the carboxylated, completely or partially hydrogenated nitrile rubber is from 5% to 65% by weight.

4. Aqueous suspension according to any of Claims 1 to 3, comprising at most 0.5 part by weight of emulsifier, based on 100 parts by weight of the carboxylated, completely or partially hydrogenated nitrile rubber.

5. Aqueous suspension according to any of Claims 1 to 4 comprising a carboxylated, completely or partially hydrogenated nitrile rubber which has repeat units which derive from at least one conjugated diene, from at least one α,β-unsaturated nitrile and from at least one further carboxylated, copolymerizable monomer, where this monomer either has at least one carboxy group in the monomer molecule or reacts in situ with release of at least one carboxy group, where at least 50% of the C=C double bonds of the diene monomer incorporated into the polymer have been hydrogenated.

6. Process for producing an aqueous suspension of a carboxylated, completely or partially hydrogenated nitrile rubber, **characterized in that**
1) a carboxylated, completely or partially hydrogenated nitrile rubber is first dissolved in an organic solvent to form an organic phase,
2) the organic phase is then brought into contact with an aqueous phase, the pH of which is at least 6, where the water dissolves completely in the organic solvent, the carboxylated, completely hydrogenated nitrile rubber precipitates, and a suspension therefore forms, and
3) the organic solvent is completely or partially removed,
where use is made of one or more organic solvents which undergo complete mixing in any ratio with water under the selected precipitation conditions.

7. Process according to Claim 6, where the pH of the aqueous phase which is used and with which the organic phase is brought into contact in step 2) is at least 3, with the proviso that within the organic phase from step 1) there is an amount of base present such that when the organic and aqueous phase are brought into contact in step 2) the resultant pH is at least 6.

8. Process according to any of Claims 6 and 7, where, as solvent, use is made of acetone, methyl ethyl ketone, formic acid, acetic acid, tetrahydrofuran, dioxane, or a mixture of two or more of the said solvents.

9. Process according to any of Claims 6 to 8, where the concentration of the carboxylated, completely or partially hydrogenated nitrile rubber in the organic phase (i.e. entirety of solvent and nitrile rubber) is in the range from 0.1% by weight to 30% by weight.

10. Process according to any of Claims 6 to 9, where the dissolution of the carboxylated, completely or partially hydrogenated nitrile rubber takes place at a temperature in the range from 0°C to 200°C.

11. Process according to any of Claims 6 to 10, where the temperature of the organic phase prior to addition of the aqueous phase in step 2) is above 0°C and below the boiling point of the organic solvent, at the pressure at which the precipitation process is carried out.

12. Process according to any of Claims 6 to 11, where the pH of the aqueous phase is set via addition of one or more basic substances.

13. Process according to any of Claims 6 to 12, where the ratio by mass of the organic phase which comprises the carboxylated, completely or partially hydrogenated nitrile rubber to the aqueous phase is from 50:1 to 1:1.

14. Process for the coating of substrate materials, by bringing the aqueous suspension according to any of Claims 1 to 5 into contact with the substrate material.

15. Process according to Claim 14, where the suspension is used in the form of a binder composition which also comprises a mixture comprising resin and/or hardener, and also optionally one or more other rubber additives.

16. Binder composition comprising
a) a suspension according to any of Claims 1 to 4, and also
b) a mixture comprising resin and/or hardener, and
c) optionally one or more other rubber additives.

17. Coated substrate material obtainable by the process according to Claim 14 or 15.

18. Process for producing composite materials, **characterized in that** the coated substrate material according to Claim 17 is embedded and vulcanized into a mixture of one or more other rubbers and auxiliaries.

19. Composite materials obtainable by the process according to Claim 18.

## Revendications

1. Suspension aqueuse d'un caoutchouc de nitrile entièrement ou partiellement hydrogéné contenant des groupes carboxyle, ayant une teneur en émulsifiant d'au plus 1 partie en poids, par rapport à 100 parties en poids du caoutchouc de nitrile entièrement ou partiellement hydrogéné contenant des groupes carboxyle, le caoutchouc de nitrile entièrement ou partiellement hydrogéné contenant des groupes carboxyle présentant dans la suspension un diamètre de particule moyen dans la plage allant de 0,01 à 0,9 micromètre, mesuré par diffusion de lumière dynamique.

2. Suspension aqueuse selon la revendication 1, dans laquelle le diamètre de particule d₅₀ déterminé par diffraction laser (pondéré en intensité) se situe dans la plage allant de 0,01 micromètre à 0,9 micromètre.

3. Suspension aqueuse selon la revendication 1 ou 2, dans laquelle le caoutchouc de nitrile entièrement ou partiellement hydrogéné contenant des groupes carboxyle se présente avec une concentration en solides de 5 % à 65 % en poids.

4. Suspension aqueuse selon l'une quelconque des revendications 1 à 3, contenant au plus 0,5 partie en poids d'émulsifiant, par rapport à 100 parties en poids du caoutchouc de nitrile entièrement ou partiellement hydrogéné contenant des groupes carboxyle.

5. Suspension aqueuse selon l'une quelconque des revendications 1 à 4, contenant un caoutchouc de nitrile entièrement ou partiellement hydrogéné contenant des groupes carboxyle qui comprend des unités de répétition qui dérivent d'au moins un diène conjugué, d'au moins un nitrile α,β-insaturé et d'au moins un autre monomère copolymérisable contenant des groupes carboxyle, soit qui comprend au moins un groupe carboxyle dans la molécule de monomère, soit qui réagit in situ avec libération d'au moins un groupe carboxyle, les doubles liaisons C=C du monomère diène copolymérisé étant hydrogénées à hauteur d'au moins 50 %.

6. Procédé de fabrication d'une suspension aqueuse d'un caoutchouc de nitrile entièrement ou partiellement hydrogéné contenant des groupes carboxyle, **caractérisé en ce que**
1) un caoutchouc de nitrile entièrement ou partiellement hydrogéné contenant des groupes carboxyle est tout d'abord dissous dans un solvant organique avec formation d'une phase organique, puis
2) la phase organique est mise en contact avec une phase aqueuse, qui présente un pH d'au moins 6, l'eau se dissolvant en totalité dans le solvant organique, le caoutchouc de nitrile entièrement ou partiellement hydrogéné contenant des groupes carboxyle précipitant et une suspension se formant ainsi, et
3) le solvant organique est éliminé en totalité ou en partie,
un ou plusieurs solvants organiques étant utilisés, qui sont entièrement miscibles avec l'eau en tout rapport dans les conditions de précipitation choisies.

7. Procédé selon la revendication 6, dans lequel la phase aqueuse utilisée, avec laquelle la phase organique est mise en contact à l'étape 2), présente un pH d'au moins 3, à condition qu'une quantité de base telle soit présente dans la phase organique de l'étape 1) qu'un pH d'au moins 6 s'ajuste lors de la mise en contact de la phase organique et de la phase aqueuse à l'étape 2).

8. Procédé selon l'une quelconque des revendications 6 ou 7, dans lequel l'acétone, la méthyléthylcétone, l'acide formique, l'acide acétique, le tétrahydrofurane, le dioxane ou des mélanges de deux ou plus de ces solvants sont utilisés en tant que solvant.

9. Procédé selon l'une quelconque des revendications 6 à 8, dans lequel la concentration du caoutchouc de nitrile entièrement ou partiellement hydrogéné contenant des groupes carboxyle dans la phase organique (c.-à-d. la somme du solvant et du caoutchouc de nitrile) est dans la plage allant de 0,1 % en poids à 30 % en poids.

10. Procédé selon l'une quelconque des revendications 6 à 9, dans lequel la dissolution du caoutchouc de nitrile entièrement ou partiellement hydrogéné contenant des groupes carboxyle a lieu à une température dans la plage allant de 0 °C à 200 °C.

11. Procédé selon l'une quelconque des revendications 6 à 10, dans lequel la température de la phase organique avant l'ajout de la phase aqueuse à l'étape 2) est supérieure à 0 °C et inférieure à la température d'ébullition du solvant organique à la pression à laquelle la précipitation est réalisée.

12. Procédé selon l'une quelconque des revendications 6 à 11, dans lequel le pH de la phase aqueuse est ajusté par ajout d'une ou de plusieurs substances basiques.

13. Procédé selon l'une quelconque des revendications 6 à 12, dans lequel le rapport en masse entre la phase organique contenant le caoutchouc de nitrile entièrement ou partiellement hydrogéné contenant des groupes carboxyle et la phase aqueuse se situe de 50:1 à 1:1.

14. Procédé de revêtement de matériaux supports, selon lequel la suspension aqueuse selon l'une quelconque des revendications 1 à 5 est mise en contact avec le matériau support.

15. Procédé selon la revendication 14, dans lequel la suspension est utilisée sous la forme d'une composition de liant, qui contient en outre un mélange contenant une résine et/ou un durcisseur, ainsi qu'éventuellement un ou plusieurs additifs de caoutchouc supplémentaires.

16. Composition de liant, contenant :
a) une suspension selon l'une quelconque des revendications 1 à 4, ainsi que
b) un mélange contenant une résine et/ou un durcisseur, et
c) éventuellement un ou plusieurs additifs de caoutchouc supplémentaires.

17. Matériau revêtu pouvant être obtenu par le procédé selon la revendication 14 ou 15.

18. Procédé de fabrication de matériaux composites, **caractérisé en ce que** le matériau support revêtu selon la revendication 17 est incorporé dans un mélange d'un ou de plusieurs caoutchoucs et adjuvants supplémentaires et vulcanisé.

19. Matériaux composites, pouvant être obtenus par le procédé selon la revendication 18.
